# EUROPEAN PATENT APPLICATION

(11) **EP 4 597 793 A1**
(43) Date of publication of application: **06.08.2025**
(21) Application number: 25150669.7
(22) Date of filing: 08.01.2025
(51) Int. Cl.: H02J 9/06, H02J 7/00

(54) **UNINTERRUPTIBLE POWER SUPPLY AND POWER SUPPLY SYSTEM**

(30) Priority: 30.01.2024 CN 202410134725
(71) Applicant: Huawei Digital Power Technologies Co., Ltd., Shenzhen, Guangdong 518043 (CN)
(72) Inventor: HUANG, Zhuyong, Shenzhen 518043 (CN)
(74) Representative: Isarpatent

(57) **Abstract**

Embodiments of this application disclose an uninterruptible power supply and a power supply system, and relate to the field of power supply technologies, to resolve problems of low circuit utilization, high production costs, and large sizes of existing UPSs. The uninterruptible power supply includes a direct current conversion circuit and three rectifier boost circuits. When each rectifier boost circuit is disconnected from a corresponding one-phase output end of a connected alternating current power supply and at least one rectifier boost circuit is connected to an energy storage apparatus, the at least one rectifier boost circuit and the direct current conversion circuit are configured to receive a first direct current voltage output by the energy storage apparatus, the at least one rectifier boost circuit is configured to: convert the first direct current voltage into a second direct current voltage, and output the second direct current voltage to an inverter circuit, and the direct current conversion circuit is configured to: convert the first direct current voltage into a third direct current voltage, and output the third direct current voltage to the inverter circuit.

## Description

### TECHNICAL FIELD

This application relates to the field of power supply technologies, and in particular, to an uninterruptible power supply and a power supply system.

### BACKGROUND

An uninterruptible power supply (UPS) is a continual power supply including an energy storage apparatus (which may also be referred to as a battery). The UPS is used to provide an uninterruptible power supply for a load that has a high requirement on power supply stability. An energy storage apparatus of a small UPS may be disposed inside the UPS, or may be disposed outside the UPS. Energy storage apparatuses of medium- and large-sized UPSs are usually disposed outside the UPS due to their large size.

The UPS further includes a rectifier (which may also be referred to as an alternating current to direct current (alternating current to direct current, AC/DC)) circuit, a direct current to direct current (direct current to direct current, DC-DC) conversion circuit (which may also be referred to as a direct current conversion circuit for short), and an inverter (which may also be referred to as a direct current to alternating current (direct current to alternating current, DC/AC)) circuit. In a process in which a UPS supplies power to a load, how to improve utilization of each circuit to reduce production costs of the UPS and reduce a size of the UPS becomes a problem that needs to be urgently resolved.

### SUMMARY

Embodiments of this application provide an uninterruptible power supply and a power supply system, to resolve problems of low circuit utilization, high production costs, and large sizes of existing UPSs.

To achieve the foregoing objectives, the following technical solutions are used in embodiments of this application.

According to a first aspect of embodiments of this application, an uninterruptible power supply is provided. The uninterruptible power supply includes a direct current conversion circuit and three rectifier boost circuits. Input ends of the three rectifier boost circuits are configured to connect to three-phase output ends of an alternating current power supply respectively. Each of the three rectifier boost circuits is connected in series to an inverter circuit. An input end of at least one rectifier boost circuit of the three rectifier boost circuits is further configured to connect to an energy storage apparatus. An output end of the direct current conversion circuit is connected to an output end of each rectifier boost circuit, and an input end of the direct current conversion circuit is configured to connect to the energy storage apparatus. When each rectifier boost circuit is disconnected from a corresponding one-phase output end of the connected alternating current power supply, and the at least one rectifier boost circuit is connected to the energy storage apparatus, the at least one rectifier boost circuit and the direct current conversion circuit are configured to receive a first direct current voltage output by the energy storage apparatus, the at least one rectifier boost circuit is configured to: convert the first direct current voltage into a second direct current voltage, and output the second direct current voltage to the inverter circuit, and the direct current conversion circuit is configured to: convert the first direct current voltage into a third direct current voltage, and output the third direct current voltage to the inverter circuit.

Based on this solution, in the case of abnormal mains, when each rectifier boost circuit is disconnected from the corresponding one-phase output end of the connected alternating current power supply, and the at least one rectifier boost circuit is connected to the energy storage apparatus, the at least one rectifier boost circuit is in an operating state. Compared with a conventional technology in which a rectifier circuit is in an idle state in the case of abnormal mains, this solution can effectively improve utilization of the rectifier boost circuit, effectively reduce production costs of the uninterruptible power supply, and reduce a size of the uninterruptible power supply.

With reference to the first aspect, in a possible implementation, when each rectifier boost circuit is connected to a corresponding one-phase output end of the connected alternating current power supply, and the at least one rectifier boost circuit is disconnected from the energy storage apparatus, each rectifier boost circuit is configured to: receive a first alternating current voltage output by one phase of the alternating current power supply, convert the first alternating current voltage into a fourth direct current voltage, and output the fourth direct current voltage to the direct current conversion circuit and the inverter circuit that is connected in series to the rectifier boost circuit, and the direct current conversion circuit is configured to: perform voltage conversion on the received fourth direct current voltage, and output a converted fourth direct current voltage to the energy storage apparatus.

With reference to the first aspect, in a possible implementation, when each rectifier boost circuit is disconnected from the alternating current power supply, and the at least one rectifier boost circuit is disconnected from the energy storage apparatus, the direct current conversion circuit is configured to: receive the first direct current voltage output by the energy storage apparatus, convert the first direct current voltage into a fifth direct current voltage, and output the fifth direct current voltage to each inverter circuit.

Based on this solution, in a process in which a rectifier boost circuit is disconnected from both the alternating current power supply and the energy storage apparatus, and the rectifier boost circuit switches a receiving voltage, the direct current conversion circuit converts the first direct current voltage into the fifth direct current voltage, and outputs the fifth direct current voltage to each inverter circuit. This can ensure continuous power supply to a load, and improve reliability of power supply to the load by the uninterruptible power supply.

With reference to the first aspect, in a possible implementation, a first switch is disposed between an input end of each rectifier boost circuit and a one-phase alternating current output end of the alternating current power supply, and a second switch is separately disposed between the input end of the at least one rectifier boost circuit and the input end of the direct current conversion circuit. When the first switches are all turned on, each rectifier boost circuit is connected to the alternating current power supply. Alternatively, when the first switches are all turned off, each rectifier boost circuit is disconnected from the alternating current power supply. When the second switches are all turned on, the at least one rectifier boost circuit is connected to the energy storage apparatus. Alternatively, when the second switches are all turned off, the at least one rectifier boost circuit is disconnected from the energy storage apparatus.

Based on this solution, in the case of normal or abnormal mains, the first switch and the second switch are turned on/off to receive the mains or receive the first direct current voltage output by the energy storage apparatus. However, in the conventional technology, a plurality of thyristors are used and controlled to be turned on/off to receive the mains or receive a direct current voltage output by the energy storage apparatus. Therefore, fewer components are used, and a topology structure is simpler. This can effectively reduce production costs of the uninterruptible power supply and reduce a size of the uninterruptible power supply.

With reference to the first aspect, in a possible implementation, a positive output end and a negative output end of each rectifier boost circuit are connected to a positive direct current bus and a negative direct current bus respectively. A bus capacitor is connected between the positive direct current bus and the negative direct current bus. The bus capacitor includes two capacitors connected in series. A midpoint of the bus capacitor is connected to a neutral line. The at least one rectifier boost circuit includes a first rectifier boost circuit and a second rectifier boost circuit, and the second switch is separately disposed between the input end of the direct current conversion circuit and an input end of each of the first rectifier boost circuit and the second rectifier boost circuit.

With reference to the first aspect, in a possible implementation, when each rectifier boost circuit is disconnected from the alternating current power supply, and the at least one rectifier boost circuit is disconnected from the energy storage apparatus, the direct current conversion circuit is further configured to: receive the first direct current voltage, convert the first direct current voltage into the fifth direct current voltage, and transmit the fifth direct current voltage to the bus capacitor, and each inverter circuit is further configured to obtain the fifth direct current voltage from the bus capacitor.

Based on this solution, in a process in which a rectifier boost circuit is disconnected from both the alternating current power supply and the energy storage apparatus, and the rectifier boost circuit switches a receiving voltage, the direct current conversion circuit converts the first direct current voltage into the fifth direct current voltage, and transmits the fifth direct current voltage to the bus capacitor, and each inverter circuit obtains the fifth direct current voltage from the bus capacitor and performs conversion. This can ensure continuous power supply to a load, and improve reliability of power supply to the load by the uninterruptible power supply.

With reference to the first aspect, in a possible implementation, each rectifier boost circuit includes a diode bridge arm, a first inductor, and a first switching transistor bridge arm. The diode bridge arm includes two diodes connected in series. The first inductor is connected between a midpoint of the diode bridge arm and the first switch that corresponds to each rectifier boost circuit. The first switching transistor bridge arm is connected between the midpoint of the diode bridge arm and the neutral line. The first switching transistor bridge arm includes two first switching transistors connected in series, and the two first switching transistors share a common anode or a common cathode. The three rectifier boost circuits further include a third rectifier boost circuit. A third switch is disposed between an input end of the third rectifier boost circuit and the neutral line. A second switching transistor is disposed in parallel with each of the two diodes of the diode bridge arm in the third rectifier boost circuit.

With reference to the first aspect, in a possible implementation, when the first switches are all turned off and the second switches are all turned on, if a voltage of the positive direct current bus is greater than a voltage of the negative direct current bus, in the third rectifier boost circuit, the second switching transistor connected in parallel to an upper bridge arm diode of the diode bridge arm is turned on, and the second switching transistor connected in parallel to a lower bridge arm diode of the diode bridge arm is turned off. If a voltage of the positive direct current bus is less than a voltage of the negative direct current bus, in the third rectifier boost circuit, the second switching transistor connected in parallel to a lower bridge arm diode of the diode bridge arm is turned on, and the second switching transistor connected in parallel to an upper bridge arm diode of the diode bridge arm is turned off.

Based on this solution, when the first switches are all turned off and the second switches are all turned on, and the first rectifier boost circuit and the second rectifier boost circuit are configured to receive the first direct current voltage output by the energy storage apparatus, the third rectifier boost circuit is used to balance the voltage of each of the positive direct current bus and the negative direct current bus. This can improve reliability of the uninterruptible power supply and utilization of the third rectifier boost circuit, effectively reduce production costs of the uninterruptible power supply, and reduce a size of the uninterruptible power supply.

With reference to the first aspect, in a possible implementation, the second switch is disposed between the input end of the first rectifier boost circuit and a positive input end of the direct current conversion circuit, and the second switch is disposed between the input end of the second rectifier boost circuit and a negative input end of the direct current conversion circuit.

Based on this solution, in the case of abnormal mains, all the second switches are turned on, so that the first rectifier boost circuit and the second rectifier boost circuit can receive the first direct current voltage output by the energy storage apparatus. Compared with a conventional technology in which a rectifier circuit is in an idle state in the case of abnormal mains, this solution can effectively improve utilization of the rectifier boost circuit. In addition, in a conventional technology, a plurality of thyristors are controlled to be turned on to receive a direct current voltage output by the energy storage apparatus. Therefore, fewer components are used, and a topology structure is simpler. This can effectively reduce production costs of the uninterruptible power supply and reduce a size of the uninterruptible power supply.

With reference to the first aspect, in a possible implementation, a capacitor branch and a second switching transistor bridge arm that are connected in parallel to the bus capacitor are disposed in the direct current conversion circuit. The capacitor branch includes two capacitors connected in series. A midpoint of the capacitor branch is connected to the neutral line. The second switching transistor bridge arm includes a third switching transistor, a fourth switching transistor, and a fifth switching transistor that are sequentially connected in series. A second inductor is disposed between an end of the fourth switching transistor and the positive input end of the direct current conversion circuit. A third inductor is disposed between the other end of the fourth switching transistor and the negative input end of the direct current conversion circuit.

Based on this solution, in the case of abnormal mains, when the first switches and the second switches are all turned off, the third switching transistor and the fourth switching transistor are controlled to be always in a turn-off state, and turn-on time and turn-off time of the fourth switch are controlled, so that the direct current conversion circuit can convert the first direct current voltage into the fifth direct current voltage, and transmit the fifth direct current voltage to the bus capacitor, and each inverter circuit obtains the fifth direct current voltage from the bus capacitor and performs conversion. This can ensure continuous power supply to a load, and improve reliability of power supply to the load by the uninterruptible power supply.

With reference to the first aspect, in a possible implementation, the second switch is separately disposed between a positive input end of the direct current conversion circuit and the input end of each of the first rectifier boost circuit and the second rectifier boost circuit. The first rectifier boost circuit and the second rectifier boost circuit further include a third switching transistor. The third switching transistor is connected in parallel to a diode located on a lower bridge arm of the diode bridge arm.

Based on this solution, in the case of abnormal mains, all the second switches are turned on, so that the first rectifier boost circuit and the second rectifier boost circuit can receive the first direct current voltage output by the energy storage apparatus. The third switching transistor is controlled to be turned on/off, so that the first direct current voltage can be converted to the second direct current voltage. Compared with a conventional technology in which a rectifier circuit is in an idle state in the case of abnormal mains, this solution can effectively improve utilization of the rectifier boost circuit. In addition, in a conventional technology, a plurality of thyristors are controlled to be turned on to receive a direct current voltage output by the energy storage apparatus. Therefore, fewer components are used, and a topology structure is simpler. This can effectively reduce production costs of the uninterruptible power supply and reduce a size of the uninterruptible power supply.

With reference to the first aspect, in a possible implementation, a capacitor branch and a second switching transistor bridge arm that are connected in parallel to the bus capacitor are disposed in the direct current conversion circuit. The capacitor branch includes two capacitors connected in series. A midpoint of the capacitor branch is connected to the neutral line. The second switching transistor bridge arm includes a fourth switching transistor and a fifth switching transistor that are connected in series. A second inductor is disposed between a midpoint of the second switching transistor bridge arm and the positive input end of the direct current conversion circuit.

Based on this solution, in the case of abnormal mains, when the first switches and the second switches are all turned off, turn-on time and turn-off time of each of the fourth switch and the fifth switch are controlled, so that the direct current conversion circuit can convert the first direct current voltage into the fifth direct current voltage, and transmit the fifth direct current voltage to the bus capacitor, and each inverter circuit obtains the fifth direct current voltage from the bus capacitor and performs conversion. This can ensure continuous power supply to a load, and improve reliability of power supply to the load by the uninterruptible power supply.

With reference to the first aspect, in a possible implementation, the second switch is separately disposed between a negative input end of the direct current conversion circuit and the input end of each of the first rectifier boost circuit and the second rectifier boost circuit. The first rectifier boost circuit and the second rectifier boost circuit further include a third switching transistor. The third switching transistor is connected in parallel to a diode located on an upper bridge arm of the diode bridge arm.

Based on this solution, in the case of abnormal mains, all the second switches are turned on, so that the first rectifier boost circuit and the second rectifier boost circuit can receive the first direct current voltage output by the energy storage apparatus. The third switching transistor is controlled to be turned on/off, so that the first direct current voltage can be converted to the second direct current voltage. Compared with a conventional technology in which a rectifier circuit is in an idle state in the case of abnormal mains, this solution can effectively improve utilization of the rectifier boost circuit. In addition, in a conventional technology, a plurality of thyristors are controlled to be turned on to receive a direct current voltage output by the energy storage apparatus. Therefore, fewer components are used, and a topology structure is simpler. This can effectively reduce production costs of the uninterruptible power supply and reduce a size of the uninterruptible power supply.

With reference to the first aspect, in a possible implementation, a capacitor branch and a second switching transistor bridge arm that are connected in parallel to the bus capacitor are disposed in the direct current conversion circuit. The capacitor branch includes two capacitors connected in series. A midpoint of the capacitor branch is connected to the neutral line. The second switching transistor bridge arm includes a fourth switching transistor and a fifth switching transistor that are connected in series. A second inductor is disposed between a midpoint of the second switching transistor bridge arm and the negative input end of the direct current conversion circuit.

Based on this solution, in the case of abnormal mains, when the first switches and the second switches are all turned off, turn-on time and turn-off time of each of the fourth switch and the fifth switch are controlled, so that the direct current conversion circuit can convert the first direct current voltage into the fifth direct current voltage, and transmit the fifth direct current voltage to the bus capacitor, and each inverter circuit obtains the fifth direct current voltage from the bus capacitor and performs conversion. This can ensure continuous power supply to a load, and improve reliability of power supply to the load by the uninterruptible power supply.

A second aspect of embodiments of this application provides a power supply system. The power supply system includes an uninterruptible power supply and an energy storage apparatus. The uninterruptible power supply is configured to provide a direct current voltage to the energy storage apparatus. The uninterruptible power supply is the uninterruptible power supply according to any one of the first aspect or the possible implementations of the first aspect.

For descriptions of the second aspect in this application, refer to the detailed descriptions of the first aspect. In addition, for beneficial effects of the second aspect, refer to analysis on the beneficial effects of the first aspect. Details are not described herein.

### BRIEF DESCRIPTION OF DRAWINGS

FIG. 1 is a diagram of a structure of an uninterruptible power supply;
FIG. 2 is a diagram of a structure of another uninterruptible power supply;
FIG. 3 is a diagram of a structure of still another uninterruptible power supply;
FIG. 4 is a diagram of a structure of an uninterruptible power supply according to an embodiment of this application;
FIG. 5 is a diagram of a structure of another uninterruptible power supply according to an embodiment of this application;
FIG. 6 is a diagram of a structure of still another uninterruptible power supply according to an embodiment of this application;
FIG. 7 is a diagram of a structure of yet another uninterruptible power supply according to an embodiment of this application;
FIG. 8 is a diagram of a structure of yet another uninterruptible power supply according to an embodiment of this application;
FIG. 9 is a diagram of a structure of yet another uninterruptible power supply according to an embodiment of this application;
FIG. 10 is a diagram of a structure of yet another uninterruptible power supply according to an embodiment of this application;
FIG. 11 is a diagram of a structure of yet another uninterruptible power supply according to an embodiment of this application;
FIG. 12 is a diagram of a structure of yet another uninterruptible power supply according to an embodiment of this application;
FIG. 13 is a diagram of a structure of yet another uninterruptible power supply according to an embodiment of this application;
FIG. 14 is a diagram of a structure of yet another uninterruptible power supply according to an embodiment of this application; and
FIG. 15 is a diagram of a structure of a power supply system according to an embodiment of this application.

### DESCRIPTION OF EMBODIMENTS

The drafting and use of embodiments are discussed in detail below. It should be appreciated, however, that many applicable inventive concepts provided in this application may be implemented in a plurality of specific environments. The specific embodiments discussed are merely illustrative of specific ways to implement and use this specification and this technology, and do not limit the scope of this application.

Unless otherwise defined, all technical terms used herein have same meanings as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, in embodiments of this application, terms such as "first" and "second" do not limit a quantity and a sequence.

In this application, a term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described, technical terms and background technologies in this application are first described.

Static bypass: A bypass circuit including a static bypass switch, which can switch a load from one power supply to another power supply. When a UPS is faulty or a load of a UPS is overloaded, the UPS is automatically switched to a static bypass, performs filtering and voltage regulation on a bypass input, and outputs a stabilized voltage to the load. Alternatively, the UPS may be manually operated to switch to a static bypass.

Maintenance bypass: A bypass circuit including a manually operated bypass switch. When a UPS is faulty and needs to be maintained, the UPS is manually switched to a maintenance bypass, and the UPS directly outputs mains to a load.

Mains: Mains is an industrial-frequency alternating current, for example, a three-phase 380 V, 50 hertz (hertz, Hz) alternating current. Three phases of the three-phase alternating current are referred to as a phase A, a phase B, and a phase C respectively.

Duty cycle: A duty cycle is a ratio of turn-on time of a switching transistor to time of an entire switching cycle in the switching cycle.

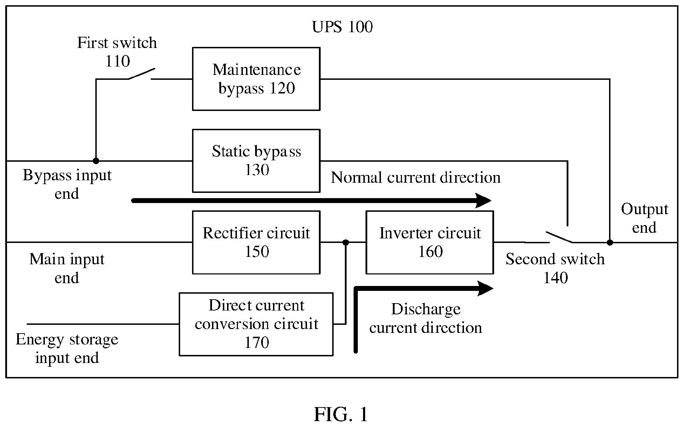

FIG. 1 is a diagram of a structure of a UPS 100. The UPS 100 is of a typical double conversion UPS structure. The UPS 100 includes a first switch 110, a maintenance bypass 120, a static bypass 130, a second switch 140, a rectifier circuit 150 (which may also be a rectifier), an inverter circuit 160 (which may also be an inverter), and a direct current conversion circuit 170. A first end of the first switch 110 is connected to a bypass input end of the UPS 100, a second end of the first switch 110 is connected to a first end of the maintenance bypass 120, and a second end of the maintenance bypass 120 is connected to an output end of the UPS 100. A first end of the static bypass 130 is connected to the bypass input end of the UPS 100, a second end of the static bypass 130 is connected to a first selection end of the second switch 140, and a fixed end of the second switch 140 is connected to the output end of the UPS 100. A first end of the rectifier circuit 150 is connected to a main input end of the UPS 100, a second end of the rectifier circuit 150 is connected to a first end of the inverter circuit 160, and a second end of the inverter circuit 160 is connected to a second selection end of the second switch 140. A first end of the direct current conversion circuit 170 is configured to connect to an energy storage input end of an energy storage apparatus, and a second end of the direct current conversion circuit 170 is connected to the second end of the rectifier circuit 150.

In the case of normal mains, the UPS 100 receives the mains through the main input end. In the UPS 100, the rectifier circuit 150 is configured to convert the mains into a stable direct current bus voltage. The inverter circuit 160 is configured to convert the direct current bus voltage into an alternating current voltage. The second switch 140 is configured to turn on the fixed end and the second selection end. The UPS 100 outputs the alternating current voltage through the output end, to supply power to a load. A current flow direction is a normal current direction as shown in FIG. 1. It may be understood that, in this case, the UPS 100 is an alternating current voltage regulator. In addition, the direct current conversion circuit 170 in the UPS 100 is configured to perform voltage conversion on the direct current bus voltage, to charge the energy storage apparatus.

In the case of abnormal mains, in the UPS 100, the direct current conversion circuit 170 is configured to boost and convert a direct current voltage output by the energy storage apparatus into a stable direct current bus voltage. The inverter circuit 160 is configured to convert the direct current bus voltage into an alternating current voltage. The UPS 100 outputs the alternating current voltage through the output end, to supply power to a load. A current flow direction is a discharge current direction as shown in FIG. 1. Therefore, when the mains goes from normal to abnormal, the UPS 100 may continuously supply power to the load, for example, may continuously supply a three-phase 380 V alternating current voltage or a 220 V alternating current voltage to the load, so that the load can maintain normal operation.

When the UPS 100 is faulty, the UPS 100 may receive the mains through the bypass input end. The static bypass 130 is configured to perform filtering and voltage regulation on the mains. The second switch 140 is configured to turn on the fixed end and the first selection end under control of a control signal. The UPS 100 outputs the alternating current voltage through the output end, to supply power to a load.

When the UPS 100 is faulty and needs to be maintained, the first switch 110 may be manually turned on. The UPS 100 may receive the mains through the bypass input end. The maintenance bypass 120 is configured to transmit the mains to the output end of the UPS 100. The UPS 100 outputs the alternating current voltage through the output end, to supply power to a load. Therefore, other components in the UPS 100 except for the first switch 110 and the maintenance bypass 120 are isolated, so that the other components can be maintained.

The following describes a specific circuit structure of a typical double conversion UPS.

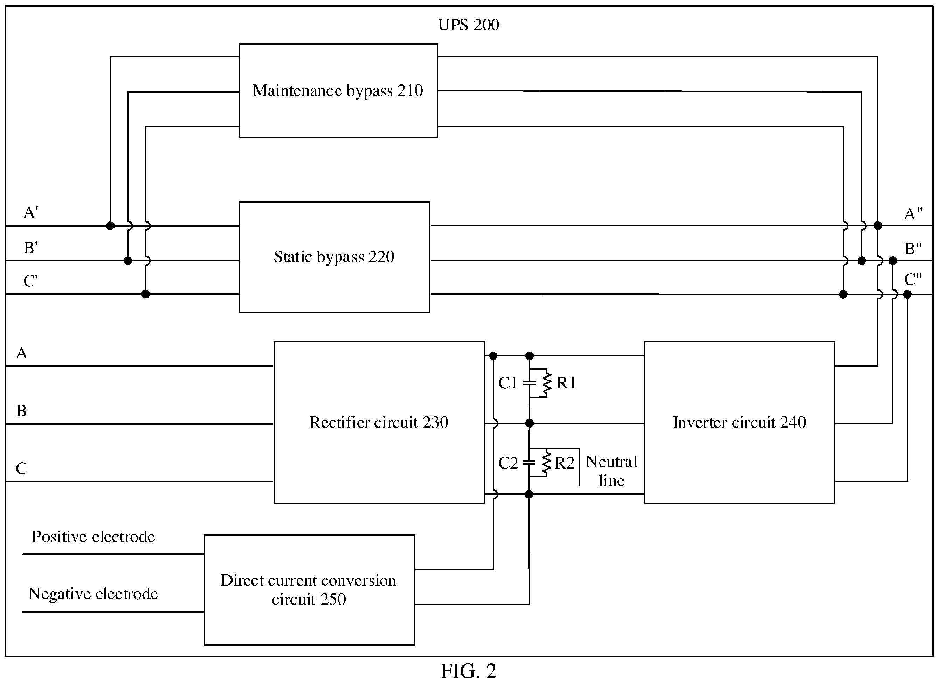

FIG. 2 is a diagram of a structure of a UPS 200. The UPS 200 includes a maintenance bypass 210, a static bypass 220, a rectifier circuit 230, a first capacitor C1, a first resistor R1, a second capacitor C2, a second resistor R2, an inverter circuit 240, and a direct current conversion circuit 250.

Three-phase input ends of the maintenance bypass 210 are connected to three-phase bypass input ends (A', B', and C') of the UPS 200, and three-phase output ends of the maintenance bypass 210 are connected to three-phase output ends (A", B", and C") of the UPS 200.

Three-phase input ends of the static bypass 220 are connected to the three-phase bypass input ends (A', B', and C') of the UPS 200, and three-phase output ends of the static bypass 220 are connected to the three-phase output ends (A", B", and C") of the UPS 200.

Three-phase input ends of the rectifier circuit 230 are connected to three-phase main input ends (A, B, and C) of the UPS 200, a first output end of the rectifier circuit 230 is connected to a first end of the first capacitor C1, and a second output end of the rectifier circuit 230 is connected to a second end of the first capacitor C1. A first end of the second capacitor C2 is connected to the second end of the first capacitor C1, the first end of the second capacitor C2 is further connected to a neutral line (neutral line, N, which may also be referred to as a neutral line), and a third output end of the rectifier circuit 230 is connected to a second end of the second capacitor C2.

The first resistor R1 is connected in parallel to the first capacitor C1, and the second resistor R2 is connected in parallel to the second capacitor C2.

A first input end of the inverter circuit 240 is connected to the first end of the first capacitor C1, a second input end of the inverter circuit 240 is connected to the second end of the first capacitor C1, and a third input end of the inverter circuit 240 is connected to the second end of the second capacitor C2. Three-phase output ends of the inverter circuit 240 are connected to the three-phase output ends (A", B", and C") of the UPS 200.

A first input/output end of the direct current conversion circuit 250 is configured to connect to a positive electrode of an energy storage apparatus, a second input/output end of the direct current conversion circuit 250 is configured to connect to a negative electrode of the energy storage apparatus, a third input/output end of the direct current conversion circuit 250 is connected to the first end of the first capacitor C1, and a fourth input/output end of the direct current conversion circuit 250 is connected to the second end of the second capacitor C2.

In the case of normal mains, the UPS 200 receives the mains through the three-phase main input ends (A, B, and C). The rectifier circuit 230 is configured to convert the mains into a direct current bus voltage and boost the direct current bus voltage. The inverter circuit 240 is configured to convert the direct current bus voltage into an alternating current voltage. The UPS 200 outputs the alternating current voltage through the three-phase output ends (A", B", and C"), to supply power to a load. The direct current conversion circuit 250 is configured to perform voltage conversion on the direct current bus voltage, to charge the energy storage apparatus.

In the case of abnormal mains, the direct current conversion circuit 250 is configured to boost and convert a direct current voltage output by the energy storage apparatus into a stable direct current bus voltage. The inverter circuit 160 is configured to convert the direct current bus voltage into an alternating current voltage. The UPS 200 outputs the alternating current voltage through the three-phase output ends (A", B", and C"), to supply power to a load. For specific operating principles of the foregoing circuits, refer to those of the circuits in a conventional technology. Details are not described in embodiments of this application.

It may be understood that, in the UPS 200, in the case of normal mains, the rectifier circuit 230 operates. Alternatively, in the case of abnormal mains, the direct current conversion circuit 250 operates, and the rectifier circuit 230 is idle and does not operate. As a result, utilization of the rectifier circuit 230 is low, which causes high costs and a large size of the UPS 200.

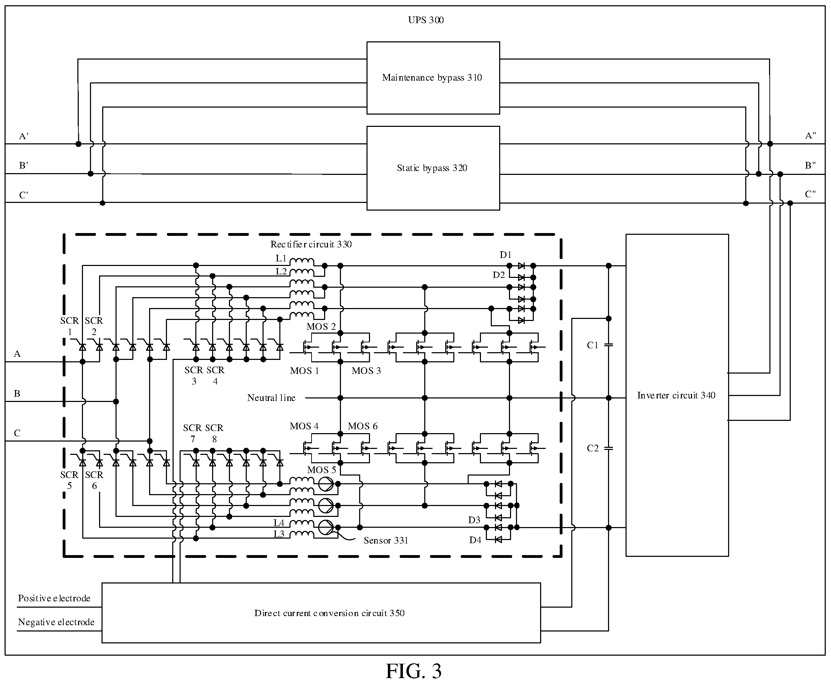

FIG. 3 is a diagram of a structure of another UPS 300. The UPS 300 includes a maintenance bypass 310, a static bypass 320, a rectifier circuit 330, a first capacitor C1, a second capacitor C2, an inverter circuit 340, and a direct current conversion circuit 350.

Three-phase input ends of the maintenance bypass 310 are connected to three-phase bypass input ends (A', B', and C') of the UPS 300, and three-phase output ends of the maintenance bypass 310 are connected to three-phase output ends (A", B", and C") of the UPS 300.

Three-phase input ends of the static bypass 320 are connected to the three-phase bypass input ends (A', B', and C') of the UPS 300, and three-phase output ends of the static bypass 320 are connected to the three-phase output ends (A", B", and C") of the UPS 300.

Three-phase input ends of the rectifier circuit 330 are connected to three-phase input ends (A, B, and C) of the UPS 300, a first output end of the rectifier circuit 330 is connected to a first end of the first capacitor C1, a second output end of the rectifier circuit 330 is connected to a second end of the first capacitor C1, and the second end of the first capacitor C1 is further connected to a neutral line. A first end of the second capacitor C2 is connected to the second end of the first capacitor C1, and a third output end of the rectifier circuit 330 is connected to a second end of the second capacitor C2.

A first input end of the inverter circuit 340 is connected to the first end of the first capacitor C1, a second input end of the inverter circuit 340 is connected to the second end of the first capacitor C1, and a third input end of the inverter circuit 340 is connected to the second end of the second capacitor C2. Three-phase output ends of the inverter circuit 340 are connected to the three-phase output ends (A", B", and C") of the UPS 300.

A first end of the direct current conversion circuit 350 is configured to connect to a positive electrode of an energy storage apparatus, a second end of the direct current conversion circuit 350 is configured to connect to a negative electrode of the energy storage apparatus, a third end of the direct current conversion circuit 350 is connected to the first end of the first capacitor C1, and a fourth end of the direct current conversion circuit 350 is connected to the second end of the second capacitor C2. A fifth end of the direct current conversion circuit 350 is connected to a first input end of the rectifier circuit 330, and a sixth end of the direct current conversion circuit 350 is connected to a second input end of the rectifier circuit 330.

Each phase circuit in the rectifier circuit 330 includes a first thyristor (which may also be referred to as a silicon controlled rectifier (silicon controlled rectifier, SCR)) SCR 1 to an eighth thyristor SCR 8, a first inductor L1 to a fourth inductor L4, a sensor 331, a first diode (diode, D) D1 to a fourth diode D4, and a first metal-oxide-semiconductor field-effect transistor (metal-oxide-semiconductor field-effect transistor, MOSFET, also referred to as a metal-oxide-semiconductor field-effect transistor, MOS for short) MOS 1 to a sixth metal-oxide-semiconductor field-effect transistor MOS 6.

Specifically, an anode of each of the first thyristor SCR 1 and the second thyristor SCR 2 is connected to one of the three-phase input ends (A, B, and C) of the UPS 300, a cathode of the first thyristor SCR 1 is connected to a first end of the first inductor L1, a cathode of the second thyristor SCR 2 is connected to a first end of the second inductor L2, and a second end of the second inductor L2 is connected to a second end of the first inductor L1. A cathode of the third thyristor SCR 3 is connected to the first end of the first inductor L1, a cathode of the fourth thyristor SCR 4 is connected to the first end of the second inductor L2, and an anode of each of the third thyristor SCR 3 and the fourth thyristor SCR 4 is connected to the first input end of the rectifier circuit 330. A positive electrode of each of the first diode D1 and the second diode D2 is connected to the second end of the first inductor L1, and a negative electrode of each of the first diode D1 and the second diode D2 is connected to the first output end of the rectifier circuit 330. After the first metal-oxide-semiconductor field-effect transistor MOS 1 to the third metal-oxide-semiconductor field-effect transistor MOS 3 are connected in parallel, one end of a parallel circuit is connected to the second end of the first inductor L1, and the other end of the parallel circuit is connected to the neutral line.

A cathode of each of the fifth thyristor SCR 5 and the sixth thyristor SCR 6 is connected to the anode of the first thyristor SCR 1, an anode of the fifth thyristor SCR 5 is connected to a first end of the third inductor L3, an anode of the sixth thyristor SCR 6 is connected to a first end of the fourth inductor L4, a second end of the fourth inductor L4 is connected to a first end of the third sensor 331, and a second end of the third sensor 331 is connected to a second end of the third inductor L3. An anode of the seventh thyristor SCR 7 is connected to the first end of the third inductor L3, an anode of the eighth thyristor SCR 8 is connected to the first end of the fourth inductor L4, and a cathode of each of the seventh thyristor SCR 7 and the eighth thyristor SCR 8 is connected to the second input end of the rectifier circuit 330. A negative electrode of each of the third diode D3 and the fourth diode D4 is connected to the second end of the third inductor L3, and a positive electrode of each of the third diode D3 and the fourth diode D4 is connected to the third output end of the rectifier circuit 330. After the fourth metal-oxide-semiconductor field-effect transistor MOS 4 to the sixth metal-oxide-semiconductor field-effect transistor MOS 6 are connected in parallel, an end is connected to the second end of the third inductor L3, and the other end is connected to the neutral line.

In the case of normal mains, the UPS 300 receives the mains through the three-phase main input ends (A, B, and C). The first thyristor SCR 1, the second thyristor SCR 2, the fifth thyristor SCR 5, and the sixth thyristor SCR 6 in each phase circuit in the rectifier circuit 330 are turned on. Other components in the rectifier circuit 330 convert the mains into a direct current bus voltage and boosts the direct current bus voltage. The inverter circuit 340 is configured to convert the direct current bus voltage into an alternating current voltage. The UPS 300 outputs the alternating current voltage through the three-phase output ends (A", B", and C"), to supply power to a load. The direct current conversion circuit 350 is configured to perform voltage conversion on the direct current bus voltage, to charge the energy storage apparatus.

In the case of abnormal mains, the first thyristor SCR 1, the second thyristor SCR 2, the fifth thyristor SCR 5, and the sixth thyristor SCR 6 in each phase circuit in the rectifier circuit 330 are turned off. The third thyristor SCR 3, the fourth thyristor SCR 4, the seventh thyristor SCR 7, and the eighth thyristor SCR 8 in each phase circuit are turned on. The rectifier circuit 330 receives a direct current voltage output by the energy storage apparatus. Other components in the rectifier circuit 330 boost the direct current voltage. The inverter circuit 340 is configured to convert the direct current bus voltage into an alternating current voltage. The UPS 300 outputs the alternating current voltage through the three-phase output ends (A", B", and C"), to supply power to a load. For specific operating principles of the foregoing circuits, refer to those of the circuits in a conventional technology. Details are not described in embodiments of this application.

It may be understood that, in the UPS 300, except for the first thyristor SCR 1 to the eighth thyristor SCR 8, all other components in the rectifier circuit 330 are in an operating state in the case of normal or abnormal mains. However, in the UPS 200, the rectifier circuit 230 is in an idle state in the case of abnormal mains. Therefore, utilization of the rectifier circuit 330 is effectively improved. However, in the case of normal mains, the first thyristor SCR 1, the second thyristor SCR 2, the fifth thyristor SCR 5, and the sixth thyristor SCR 6 in each phase circuit are turned on. In the case of abnormal mains, the third thyristor SCR 3, the fourth thyristor SCR 4, the seventh thyristor SCR 7, and the eighth thyristor SCR 8 in each phase circuit are turned on. The eight thyristors do not operate at the same time, causing low utilization of both the eight thyristors and the rectifier circuit 330. Then, the rectifier circuit 330 has a complex topology structure and uses many components. For example, each phase circuit in the rectifier circuit 330 includes eight thyristors (the first thyristor SCR 1 to the eighth thyristor SCR 8) and four inductors (the first inductor L1 to the fourth inductor L4). This causes high costs and a large size of the UPS 300. In addition, the thyristor is controlled to be turned on or off to enable the UPS 300 to receive the mains or receive the direct current voltage output by the energy storage apparatus. There is a voltage drop when a thyristor is turned on, which causes a conduction loss, thereby resulting in low efficiency for both the rectifier circuit 330 and the UPS 300.

In conclusion, both the UPS 200 and the UPS 300 have problems of low circuit utilization, high costs, and large sizes. Based on this, an embodiment of this application provides an uninterruptible power supply (uninterruptible power supply, UPS). A rectifier boost circuit in the uninterruptible power supply is in an operating state in the case of normal or abnormal mains. This can improve utilization of the rectifier boost circuit, effectively reduce production costs of the uninterruptible power supply, and reduce a size of the uninterruptible power supply.

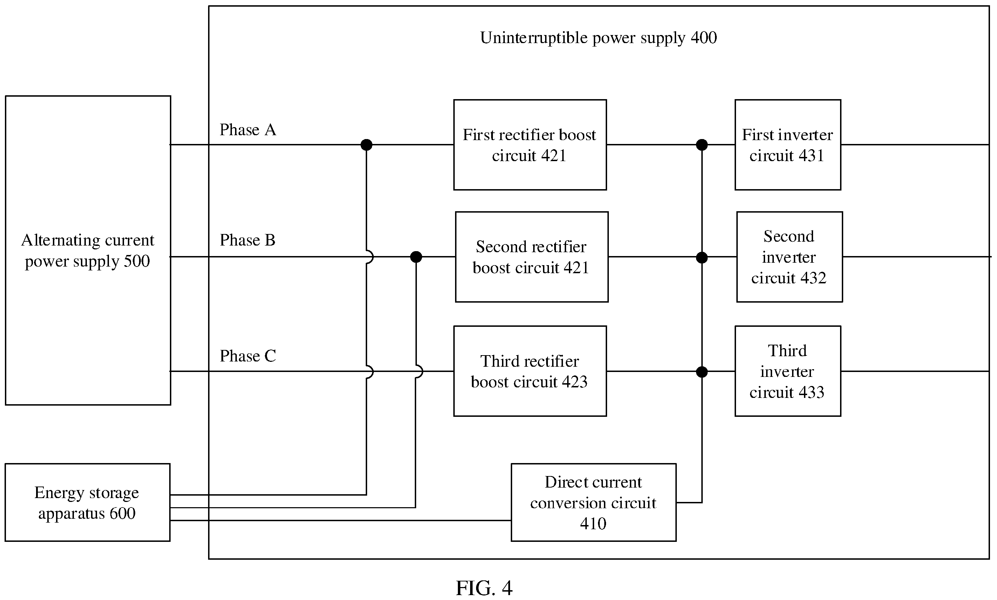

FIG. 4 is a diagram of a structure of an uninterruptible power supply 400 according to an embodiment of this application. The uninterruptible power supply 400 includes a direct current conversion circuit 410, a first rectifier boost circuit 421, a second rectifier boost circuit 422, and a third rectifier boost circuit 423. The first rectifier boost circuit 421 is connected in series to a first inverter circuit 431, the second rectifier boost circuit 422 is connected in series to a second inverter circuit 432, and the third rectifier boost circuit 423 is connected in series to a third inverter circuit 433. Input ends of the first rectifier boost circuit 421, the second rectifier boost circuit 422, and the third rectifier boost circuit 423 are configured to connect to three-phase output ends: phase A, phase B, and phase C of an alternating current power supply 500 respectively. The alternating current power supply 500 may be mains. A specific phase to which each rectifier boost circuit is configured to connect, among the three-phase output ends of the alternating current power supply 500, is not limited in embodiments of this application. An input end of at least one rectifier boost circuit of the three rectifier boost circuits is further configured to connect to an energy storage apparatus 600. An output end of the direct current conversion circuit 410 is connected to an output end of each rectifier boost circuit, and an input end of the direct current conversion circuit 410 is configured to connect to the energy storage apparatus 600. In this embodiment of this application, an end that is of the direct current conversion circuit 410 and that is connected to the energy storage apparatus 600 is referred to as an input end.

Optionally, that the input end of the at least one rectifier boost circuit of the three rectifier boost circuits is further configured to connect to the energy storage apparatus 600 includes: The input ends of the three rectifier boost circuits are all connected to the energy storage apparatus 600, or input ends of any two of the three rectifier boost circuits are connected to the energy storage apparatus 600, or an input end of any one of the three rectifier boost circuits is connected to the energy storage apparatus 600. This is not limited in embodiments of this application. In the following embodiments of this application, an example in which the input ends of any two of the three rectifier boost circuits are connected to the energy storage apparatus 600 is used for description. For example, in FIG. 4, the input end of the first rectifier boost circuit 421 and the input end of the second rectifier boost circuit 422 are configured to connect to the energy storage apparatus 600.

Still refer to FIG. 4. In the case of abnormal mains, when each rectifier boost circuit is disconnected from a corresponding one-phase output end of the connected alternating current power supply 500, and the first rectifier boost circuit 421 and the second rectifier boost circuit 422 are connected to the energy storage apparatus 600, the first rectifier boost circuit 421, the second rectifier boost circuit 422, and the direct current conversion circuit 410 are configured to receive a first direct current voltage output by the energy storage apparatus 600, the first rectifier boost circuit 421 and the second rectifier boost circuit 422 are configured to: convert the first direct current voltage into a second direct current voltage, and output the second direct current voltage to each inverter circuit, the direct current conversion circuit 410 is configured to: convert the first direct current voltage into a third direct current voltage, and output the third direct current voltage to each inverter circuit, and each inverter circuit is configured to convert the third direct current voltage into an alternating current voltage, to supply power to a load that is connected to each inverter circuit.

In the case of normal mains, when each rectifier boost circuit is connected to a corresponding one-phase output end of the connected alternating current power supply 500, and the first rectifier boost circuit 421 and the second rectifier boost circuit 422 are disconnected from the energy storage apparatus 600, each rectifier boost circuit is configured to: receive a first alternating current voltage output by one phase of the alternating current power supply 500, convert the first alternating current voltage into a fourth direct current voltage, and output the fourth direct current voltage to the direct current conversion circuit 410 and the inverter circuit connected in series to the rectifier boost circuit, the direct current conversion circuit 410 is configured to: perform voltage conversion on the received fourth direct current voltage, and output a converted fourth direct current voltage to the energy storage apparatus 600, and the inverter circuit is configured to convert the fourth direct current voltage into an alternating current voltage, to supply power to a load. Specifically, the direct current conversion circuit 410 is configured to: convert a part of output power of each rectifier boost circuit, and output a converted part to the energy storage apparatus 600. The inverter circuit is configured to convert the other part of the output power of each rectifier boost circuit into an alternating current voltage, to supply power to a load.

According to the uninterruptible power supply 400 provided in this embodiment of this application, in the case of normal or abnormal mains, the at least one rectifier boost circuit (for example, the first rectifier boost circuit 421 and the second rectifier boost circuit 422) is in an operating state. However, in the UPS 200, the rectifier circuit 230 is in an idle state in the case of abnormal mains. Therefore, utilization of the rectifier boost circuit is effectively improved, production costs of the uninterruptible power supply 400 can be effectively reduced, and a size of the uninterruptible power supply 400 is reduced.

In a possible embodiment, refer to FIG. 4. In the case of abnormal mains, in a process in which the first rectifier boost circuit 421 and the second rectifier boost circuit 422 are switched to receive the first direct current voltage output by the energy storage apparatus 600, or when mains returns to normal, in a process in which each rectifier boost circuit resumes receiving the mains, when each rectifier boost circuit is disconnected from the alternating current power supply 500, and the first rectifier boost circuit 421 and the second rectifier boost circuit 422 are disconnected from the energy storage apparatus 600, the direct current conversion circuit 410 is configured to: receive a first direct current voltage output by the energy storage apparatus 600, convert the first direct current voltage into a fifth direct current voltage, and output the fifth direct current voltage to each inverter circuit, and each inverter circuit is configured to convert the fifth direct current voltage into an alternating current voltage, to supply power to a load.

In a possible embodiment, switching time is short, so that a current specification of a component in the direct current conversion circuit 410 can be reduced. In a switching process, the direct current conversion circuit 410 may operate beyond a rated current, to meet a power supply requirement of the load. This can reduce a size and costs of the direct current conversion circuit 410.

In a possible embodiment, when the switching is completed, the direct current conversion circuit 410 may operate at a rated current and output rated power. In this case, total output power of the operating uninterruptible power supply 400 is a sum of the rated output power of the direct current conversion circuit 410 and output power of the first rectifier boost circuit 421 and the second rectifier boost circuit 422.

According to the uninterruptible power supply 400 provided in this embodiment of this application, in a process in which a rectifier boost circuit is disconnected from both the alternating current power supply 500 and the energy storage apparatus 600, and the rectifier boost circuit switches a receiving voltage, the direct current conversion circuit 410 converts the first direct current voltage into the fifth direct current voltage, and outputs the fifth direct current voltage to each inverter circuit. This can ensure continuous power supply to a load, and improve reliability of power supply to the load by the uninterruptible power supply 400.

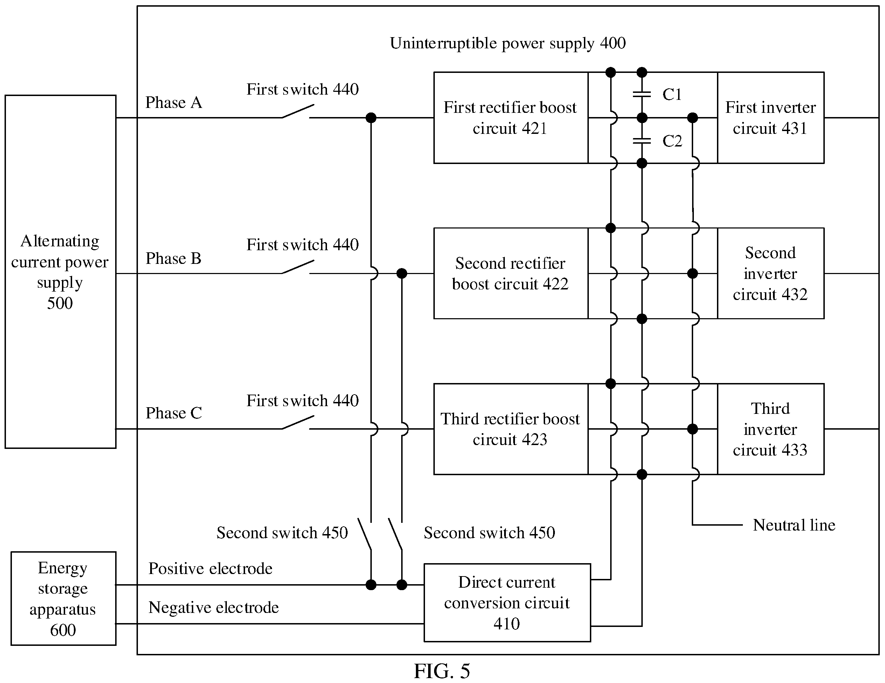

In a possible embodiment, as shown in FIG. 5, a first switch 440 is disposed between an input end of each rectifier boost circuit and a one-phase alternating current output end of the alternating current power supply 500, and a second switch 450 is separately disposed between the input end of the direct current conversion circuit 410 and the input end of each of the first rectifier boost circuit 421 and the second rectifier boost circuit 422. In the case of normal mains, when the first switches 440 are all turned on, each rectifier boost circuit is connected to the alternating current power supply 500. In the case of abnormal mains, when the first switches 440 are all turned off, each rectifier boost circuit is disconnected from the alternating current power supply 500. In the case of abnormal mains, when the second switches 450 are all turned on, the first rectifier boost circuit 421 and the second rectifier boost circuit 422 are connected to the energy storage apparatus 600. In the case of normal mains, when the second switches 450 are all turned off, the first rectifier boost circuit 421 and the second rectifier boost circuit 422 are disconnected from the energy storage apparatus 600. Therefore, in the case of normal mains, each rectifier boost circuit may receive a first alternating current voltage output by one phase of the alternating current power supply 500. In the case of abnormal mains, the first rectifier boost circuit 421 and the second rectifier boost circuit 422 may receive the first direct current voltage output by the energy storage apparatus 600.

In a possible embodiment, as shown in FIG. 5, a positive output end and a negative output end of each rectifier boost circuit are connected to a positive direct current bus and a negative direct current bus respectively. A bus capacitor is connected between the positive direct current bus and the negative direct current bus. The bus capacitor is configured to: maintain energy and perform filtering. The bus capacitor includes two capacitors C1 and C2 connected in series. A midpoint of the bus capacitor is connected to a neutral line. The second switch 450 is separately disposed between the input end of the direct current conversion circuit 410 and the input end of each of the first rectifier boost circuit 421 and the second rectifier boost circuit 422. The direct current conversion circuit 410 is connected to the positive direct current bus and the negative direct current bus.

In a possible embodiment, a capacitance value of the first capacitor C1 is equal to a capacitance value of the second capacitor C2. Specific capacitance values of the first capacitor C1 and the second capacitor C2 are not limited in embodiments of this application.

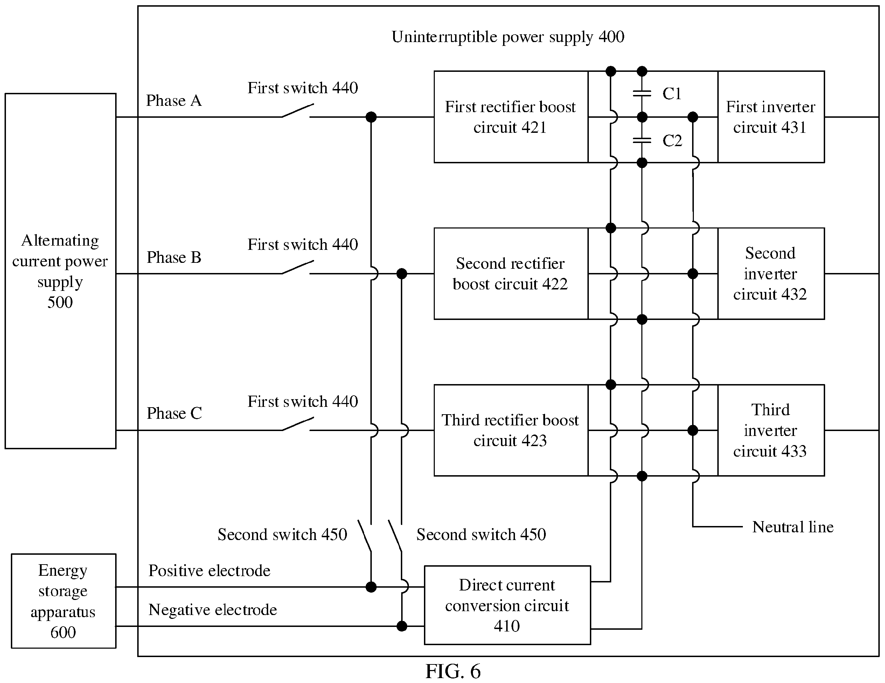

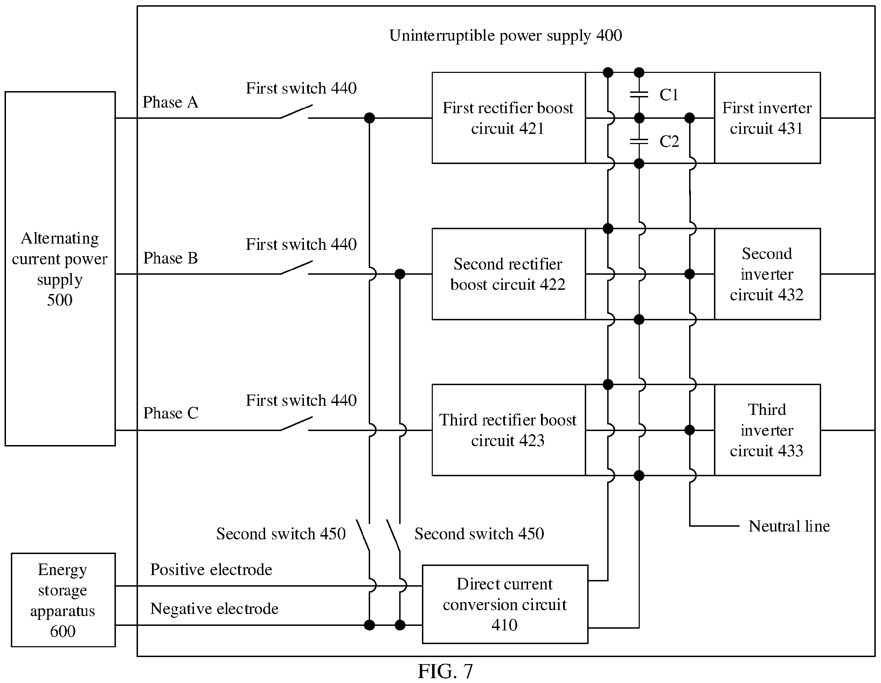

In a possible embodiment, that the second switch 450 is separately disposed between the input end of the direct current conversion circuit 410 and the input end of each of the first rectifier boost circuit 421 and the second rectifier boost circuit 422 includes the following cases: As shown in FIG. 5, the second switch 450 is separately disposed between a positive input end of the direct current conversion circuit 410 and the input end of each of the first rectifier boost circuit 421 and the second rectifier boost circuit 422. Alternatively, as shown in FIG. 6, the second switch 450 is disposed between the input end of the first rectifier boost circuit 421 and the positive input end of the direct current conversion circuit 410, and the second switch 450 is disposed between the input end of the second rectifier boost circuit 422 and a negative input end of the direct current conversion circuit 410. Alternatively, as shown in FIG. 7, the second switch 450 is separately disposed between a negative input end of the direct current conversion circuit 410 and the input end of each of the first rectifier boost circuit 421 and the second rectifier boost circuit 422.

In the case of normal mains, when the first switches 440 are all turned on, and the second switches 450 are all turned off, each rectifier boost circuit is configured to: receive a first alternating current voltage output by one phase of the alternating current power supply 500, convert the first alternating current voltage into a fourth direct current voltage, and output the fourth direct current voltage to the bus capacitor. The bus capacitor is configured to: maintain energy and perform filtering on the fourth direct current voltage. Each inverter circuit is configured to invert the received fourth direct current voltage to obtain an alternating current voltage, to supply power to a load. The direct current conversion circuit 410 is configured to: receive the fourth direct current voltage, and perform voltage buck on the fourth direct current voltage, to charge the energy storage apparatus 600.

In the case of abnormal mains, when the first switches 440 are all turned off, and the second switches 450 are all turned on, the first rectifier boost circuit 421 and the second rectifier boost circuit 422 are configured to: receive the first direct current voltage output by the energy storage apparatus 600, and boost the first direct current voltage to obtain a second direct current voltage, and each inverter circuit is configured to invert the received second direct current voltage to obtain an alternating current voltage, to supply power to a load.

It may be understood that, in the uninterruptible power supply 400, in the case of normal or abnormal mains, both the first rectifier boost circuit 421 and the second rectifier boost circuit 422 are in an operating state. However, in the UPS 200, the rectifier circuit 230 is in an idle state in the case of abnormal mains. Therefore, utilization of the first rectifier boost circuit 421 and the second rectifier boost circuit 422 is effectively improved. In addition, in the uninterruptible power supply 400, the first switch 440 and the second switch 450 are turned on/off to receive the mains or receive the first direct current voltage output by the energy storage apparatus 600. However, in the UPS 300, the first thyristor SCR 1 to the eighth thyristor SCR 8 are controlled to be turned on/off to receive the mains or receive a direct current voltage output by the energy storage apparatus. Therefore, fewer components are used, and a topology structure is simpler. This can effectively reduce production costs of the uninterruptible power supply 400 and reduce a size of the uninterruptible power supply 400.

In a possible embodiment, types of the first switch 440 and the second switch 450, and types of switches in the following embodiments include relays or contactors. Specific types of the switches are not limited in embodiments of this application. A voltage drop of each of a relay and a contactor is less than a voltage drop of a thyristor. Therefore, compared with the UPS 300 in which the thyristor is used in the rectifier circuit 330, the uninterruptible power supply 400 provided in this embodiment of this application, when used in a UPS, can improve efficiency of the UPS.

In a possible embodiment, the uninterruptible power supply 400 may further include a control circuit. The control circuit is configured to generate a control signal, to control the first switch 440 and the second switch 450, and a switch or another component that needs to be controlled in the following embodiments. The control circuit may be a microcontroller unit (microcontroller unit, MCU), or may be referred to as a single-chip microcomputer. A specific type of the control circuit is not limited in embodiments of this application.

According to the uninterruptible power supply 400 provided in this embodiment of this application, in the case of normal or abnormal mains, the first switch 440 and the second switch 450 are turned on/off to receive the mains or receive the first direct current voltage output by the energy storage apparatus 600. However, in the UPS 300, the plurality of thyristors are controlled to be turned on/off to receive the mains or receive a direct current voltage output by the energy storage apparatus. Therefore, fewer components are used, and a topology structure is simpler. This can effectively reduce production costs of the uninterruptible power supply 400 and reduce a size of the uninterruptible power supply 400.

In a possible embodiment, when each of the first switch 440 and the second switch 450 is a relay or a contactor, action time is required for the switches to be switched from a turn-on state to a turn-off state, or switched from a turn-off state to a turn-on state. Action time for the relay is generally over a dozen milliseconds (ms), and action time for the contactor is generally greater than or equal to 50 ms. To avoid a voltage decrease at two ends of the bus capacitor in a state switching process of a switch, the direct current conversion circuit 410 is further configured to: in the state switching process of the switch, receive the first direct current voltage output by the energy storage apparatus 600, boost the first direct current voltage, and transmit a boosted first direct current voltage to the bus capacitor.

Specifically, refer to FIG. 5. In the case of abnormal mains, in a process in which the first rectifier boost circuit 421 and the second rectifier boost circuit 422 are switched to receive the first direct current voltage output by the energy storage apparatus 600, or when mains returns to normal, in a process in which each rectifier boost circuit resumes receiving the mains, when the first switches 440 and the second switches 450 are both turned off, each rectifier boost circuit is disconnected from the alternating current power supply 500, and the first rectifier boost circuit 421 and the second rectifier boost circuit 422 are disconnected from the energy storage apparatus 600, the direct current conversion circuit 410 is further configured to: receive the first direct current voltage, convert the first direct current voltage into the fifth direct current voltage, and transmit the fifth direct current voltage to the bus capacitor, and each inverter circuit is further configured to: obtain the fifth direct current voltage from the bus capacitor, and convert the fifth direct current voltage into an alternating current, to supply power to a load. Therefore, when the uninterruptible power supply 400 is switched from receiving the mains to receiving the first direct current voltage output by the energy storage apparatus 600, or is switched from receiving the first direct current voltage output by the energy storage apparatus 600 to receiving the mains, in a state switching process of a switch, a voltage decrease at two ends of the bus capacitor can be avoided, and each inverter circuit inverts the received fifth direct current voltage to obtain an alternating current voltage to supply power to a load. This can improve reliability of power supply to the load by the uninterruptible power supply 400.

In a possible embodiment, switching time of a state of a switch is short, so that a current specification of a component in the direct current conversion circuit 410 can be reduced. In the state switching process of the switch, the direct current conversion circuit 410 may operate beyond a rated current. This can reduce a size and costs of the direct current conversion circuit 410.

According to the uninterruptible power supply 400 provided in this embodiment of this application, in a process in which a state of a switch is switched, a rectifier boost circuit is disconnected from both the alternating current power supply 500 and the energy storage apparatus 600, and the rectifier boost circuit switches a receiving voltage, the direct current conversion circuit 410 converts the first direct current voltage into the fifth direct current voltage, and outputs the fifth direct current voltage to each inverter circuit. This can ensure continuous power supply to a load, and improve reliability of power supply to the load by the uninterruptible power supply 400.

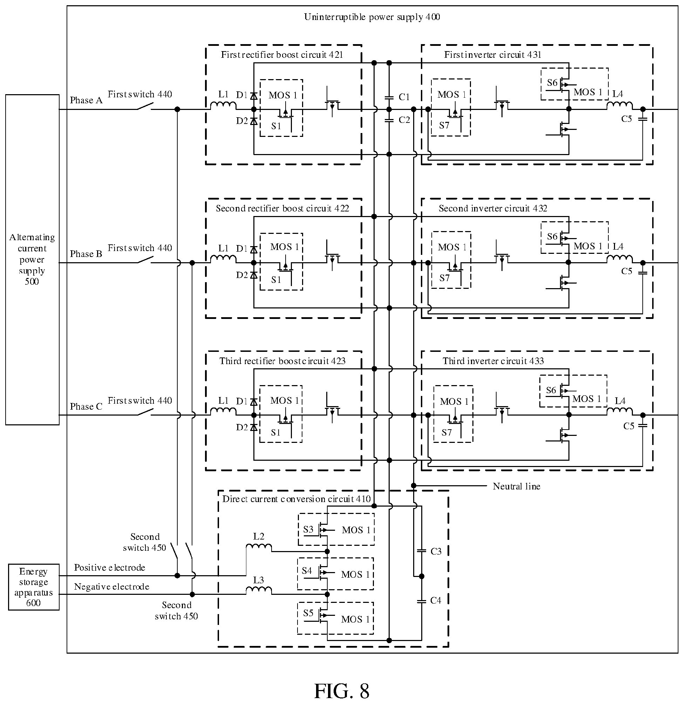

In a possible embodiment, as shown in FIG. 8, each rectifier boost circuit includes a diode bridge arm, a first inductor L1, and a first switching transistor bridge arm. The diode bridge arm includes two diodes D1 and D2 connected in series, and a positive electrode of the diode D1 is connected to a negative electrode of the diode D2. The first inductor L1 is connected between a midpoint of the diode bridge arm and the first switch 440 that corresponds to each rectifier boost circuit. The first switching transistor bridge arm is connected between a midpoint of the diode bridge arm and the neutral line. The first switching transistor bridge arm includes two first switching transistors S 1 connected in series, and the two first switching transistors S1 share a common anode or a common cathode, so that the first switching transistor bridge arm can be completely turned off.

Optionally, the first switching transistor S1 and the following switching transistors may be at least one of a metal-oxide-semiconductor field-effect transistor, an insulate-gate bipolar transistor (insulate-gate bipolar transistor, IGBT), or a thyristor. This is not limited in embodiments of this application.

For example, as shown in FIG. 8, the switching transistors may each be a metal-oxide-semiconductor field-effect transistor MOS 1.

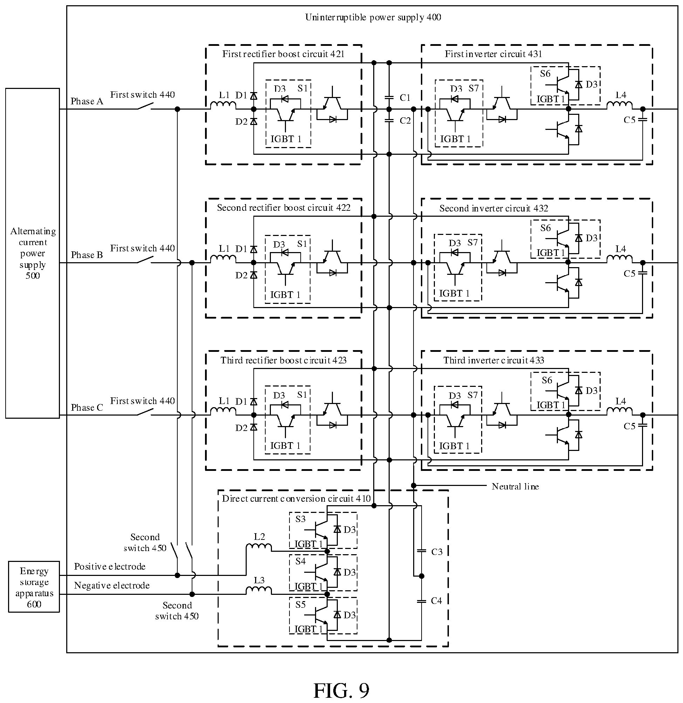

For another example, as shown in FIG. 9, when the switching transistors include an insulate-gate bipolar transistor, the switching transistors may include an IGBT 1 and a third diode D3. A negative electrode of the third diode D3 is connected to a collector (collector, C) of the IGBT 1, and a positive electrode of the third diode D3 is connected to an emitter (emitter, E) of the IGBT 1. For example, the first switching transistor S1 includes the IGBT 1 and the third diode D3.

In a possible embodiment, as shown in FIG. 8, the second switch 450 is disposed between the input end of the first rectifier boost circuit 421 and a positive input end of the direct current conversion circuit 410, and the second switch 450 is disposed between the input end of the second rectifier boost circuit 422 and a negative input end of the direct current conversion circuit 410.

In a possible embodiment, as shown in FIG. 8, a capacitor branch and a second switching transistor bridge arm that are connected in parallel to the bus capacitor are disposed in the direct current conversion circuit 410. The capacitor branch includes two capacitors C3 and C4 connected in series. A midpoint of the capacitor branch is connected to the neutral line. The second switching transistor bridge arm includes a third switching transistor S3, a fourth switching transistor S4, and a fifth switching transistor S5 that are sequentially connected in series. A second inductor L2 is disposed between an end of the fourth switching transistor S4 and the positive input end of the direct current conversion circuit 410. A third inductor L3 is disposed between the other end of the fourth switching transistor S4 and the negative input end of the direct current conversion circuit 410. It may be understood that the capacitor C3 in the capacitor branch is connected in parallel to the capacitor C1 in the bus capacitor, and the capacitor C4 in the capacitor branch is connected in parallel to the capacitor C2 in the bus capacitor.

Optionally, a topology type of each inverter circuit includes at least one of a two-level half-bridge topology, a T-type three-level topology, or an I-type three-level topology. The topology type of each inverter circuit is not limited in embodiments of this application. In this embodiment of this application, an example in which the topology structure of each inverter circuit is the T-type three-level topology is used for description.

In a possible embodiment, as shown in FIG. 8, each inverter circuit includes a fourth inductor L4, a capacitor C5, a third switching transistor bridge arm, and a fourth switching transistor bridge arm. Two ends of the third switching transistor bridge arm are connected to a positive direct current bus and a negative direct current bus respectively. The fourth switching transistor bridge arm is connected between a midpoint of the third switching transistor bridge arm and the neutral line. An end of the fourth inductor L4 is connected to the midpoint of the third switching transistor bridge arm, and the other end of the fourth inductor L4 is connected to an output end of the inverter circuit. The capacitor C5 is connected between the output end of the inverter circuit and the neutral line. The third switching transistor bridge arm includes two sixth switching transistors S6 connected in series, and the fourth switching transistor bridge arm includes two seventh switching transistors S7 connected in series.

With reference to FIG. 9, in this embodiment of this application, an example in which the switching transistors include an insulate-gate bipolar transistor and a diode connected in parallel to the insulate-gate bipolar transistor is used to describe an operating principle of the uninterruptible power supply 400.

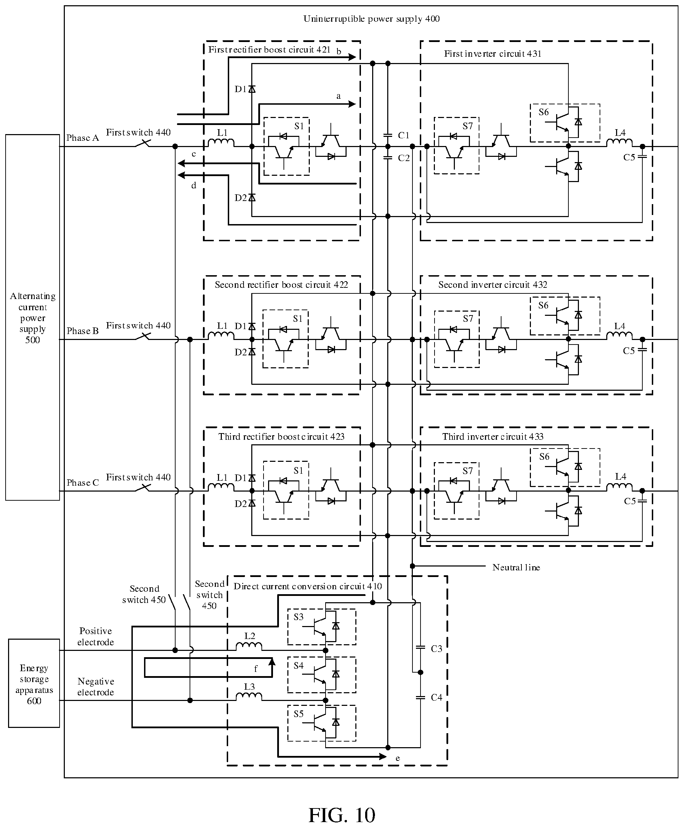

As shown in FIG. 10, in the case of normal mains, when the first switches 440 are all turned on, the second switches 450 are all turned off, each rectifier boost circuit is connected to a corresponding one-phase output end of the connected alternating current power supply 500, and the first rectifier boost circuit 421 and the second rectifier boost circuit 422 are disconnected from the energy storage apparatus 600:
Each rectifier boost circuit is configured to: receive a first alternating current voltage output by one phase of the alternating current power supply 500, convert the first alternating current voltage into a fourth direct current voltage, and output the fourth direct current voltage to the bus capacitor. Specifically, an operating process of the first rectifier boost circuit 421 is used as an example. When the first switching transistor bridge arm in the first rectifier boost circuit 421 is turned on, a current direction is shown by a in FIG. 10. In this case, the first inductor L1 in the first rectifier boost circuit 421 is charged. When the first switching transistor bridge arm in the first rectifier boost circuit 421 is turned off, a current direction is shown by b in FIG. 10. In this case, the first inductor L1 in the first rectifier boost circuit 421 is discharged, and the first diode D1 is configured to perform rectification. In a negative half-cycle of a phase A alternating current voltage, when the first switching transistor bridge arm in the first rectifier boost circuit 421 is turned on, a current direction is shown by c in FIG. 10. In this case, the first inductor L1 in the first rectifier boost circuit 421 is charged. When the first switching transistor bridge arm in the first rectifier boost circuit 421 is turned off, a current direction is shown by d in FIG. 10. In this case, the first inductor L1 in the first rectifier boost circuit 421 is discharged, and the second diode D2 is configured to perform rectification. That the first switching transistor bridge arm is turned on means that the two first switching transistors S1 connected in series in the first switching transistor bridge arm are simultaneously turned on. That the first switching transistor bridge arm is turned off means that the two first switching transistors S1 connected in series in the first switching transistor bridge arm are simultaneously turned off.

It may be understood that, in a positive half-cycle and a negative half-cycle of a phase A alternating current voltage, turn-on time and turn-off time (which may also be referred to as a duty cycle) of the first switching transistor bridge arm in the first rectifier boost circuit 421 are controlled to cause the first inductor L1 to be charged and discharged, so that voltage boost can be implemented. For a specific voltage boost principle of the first rectifier boost circuit 421, refer to a boost (Boost) chopper circuit. Details are not described in embodiments of this application. For operating processes of other rectifier boost circuits, refer to related descriptions of the first rectifier boost circuit 421. Details are not described in embodiments of this application.

Each inverter circuit is configured to invert the fourth direct current voltage obtained from the bus capacitor, to obtain an alternating current, to supply power to a load. For a specific process, refer to the conventional technology. Details are not described in embodiments of this application.

The direct current conversion circuit 410 is configured to: obtain the fourth direct current voltage from the bus capacitor, perform voltage buck on the fourth direct current voltage, and output a reduced fourth direct current voltage to the energy storage apparatus 600. Specifically, the fourth switching transistor S4 in the direct current conversion circuit 410 is always in a turn-off state. When the third switching transistor S3 and the fifth switching transistor S5 in the direct current conversion circuit 410 are turned on, a current direction is shown by e in FIG. 10. In this case, the second inductor L2 and the third inductor L3 in the direct current conversion circuit 410 are charged. When the third switching transistor S3 and the fifth switching transistor S5 in the direct current conversion circuit 410 are turned off, a current direction is shown by f in FIG. 10. In this case, the second inductor L2 and the third inductor L3 in the direct current conversion circuit 410 are discharged and freewheel through the third diode D3 in the fourth switching transistor S4.

It may be understood that, turn-on time and turn-off time (which may also be referred to as a duty cycle) of the third switching transistor S3 and the fifth switching transistor S5 in the direct current conversion circuit 410 are controlled to cause the second inductor L2 and the third inductor L3 to be charged and discharged, so that voltage buck can be implemented. For a specific voltage buck principle of the direct current conversion circuit 410, refer to a buck (Buck) circuit. Details are not described in embodiments of this application.

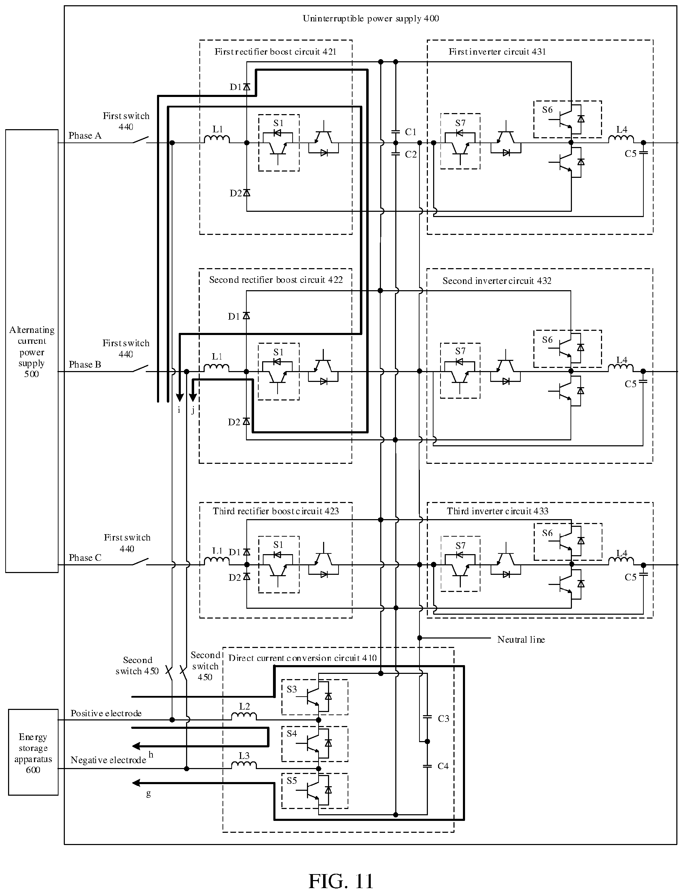

Refer to FIG. 11. In the case of abnormal mains, in a process in which the first switches 440 and the second switches 450 are both turned off, and the first rectifier boost circuit 421 and the second rectifier boost circuit 422 are switched to receive the first direct current voltage output by the energy storage apparatus 600, or when mains returns to normal, in a process in which the first switches 440 and the second switches 450 are both turned off, the first rectifier boost circuit 421 and the second rectifier boost circuit 422 resume receiving the mains, each rectifier boost circuit is disconnected from the alternating current power supply 500, and the first rectifier boost circuit 421 and the second rectifier boost circuit 422 are disconnected from the energy storage apparatus 600:
The direct current conversion circuit 410 is further configured to: receive the first direct current voltage, convert the first direct current voltage into the fifth direct current voltage, and transmit the fifth direct current voltage to the bus capacitor. Specifically, the third switching transistor S3 and the fifth switching transistor S5 in the direct current conversion circuit 410 are always in a turn-off state. When the fourth switching transistor S4 in the direct current conversion circuit 410 is turned off, a current direction is shown by g in FIG. 11. In this case, the second inductor L2 and the third inductor L3 in the direct current conversion circuit 410 is discharged through the third diode D3 in the third switching transistor S3 and the third diode D3 in the seventh switching transistor S7. When the fourth switching transistor S4 in the direct current conversion circuit 410 is turned on, a current direction is shown by h in FIG. 11. In this case, the second inductor L2 and the third inductor L3 in the direct current conversion circuit 410 are charged.

It may be understood that, turn-on time and turn-off time (which may also be referred to as a duty cycle) of the fourth switching transistor S4 in the direct current conversion circuit 410 are controlled to cause the second inductor L2 and the third inductor L3 to be charged and discharged, so that voltage boost can be implemented. For a specific voltage boost principle of the direct current conversion circuit 410, refer to a boost (Boost) chopper circuit. Details are not described in embodiments of this application.

As shown in FIG. 11, in the case of abnormal mains, when the first switches 440 are all turned off, the second switches 450 are all turned on, each rectifier boost circuit is disconnected from a corresponding one-phase output end of the connected alternating current power supply 500, and the first rectifier boost circuit 421 and the second rectifier boost circuit 422 are connected to the energy storage apparatus 600:
The first rectifier boost circuit 421 and the second rectifier boost circuit 422 are configured to: receive the first direct current voltage output by the energy storage apparatus 600, convert the first direct current voltage into a second direct current voltage, and output the second direct current voltage to the bus capacitor. Specifically, when the first switching transistor bridge arm in the first rectifier boost circuit 421 and the first switching transistor bridge arm in the second rectifier boost circuit 422 are turned on, a current direction is shown by i in FIG. 11. The first inductor L1 in the first rectifier boost circuit 421 and the first inductor L1 in the second rectifier boost circuit 422 are charged. When the first switching transistor bridge arm in the first rectifier boost circuit 421 and the first switching transistor bridge arm in the second rectifier boost circuit 422 are turned off, a current direction is shown by j in FIG. 11. The first inductor L1 in the first rectifier boost circuit 421 and the first inductor L1 in the second rectifier boost circuit 422 are discharged.

It may be understood that, turn-on time and turn-off time (which may also be referred to as a duty cycle) of the first switching transistor bridge arm in the first rectifier boost circuit 421 and the first switching transistor bridge arm in the second rectifier boost circuit 422 are controlled to cause the first inductor L1 in the first rectifier boost circuit 421 and the first inductor L1 in the second rectifier boost circuit 422 to be charged and discharged, so that voltage boost can be implemented. For a specific principle, refer to a boost (Boost) chopper circuit. Details are not described in embodiments of this application. However, in the UPS 200, the rectifier circuit 230 is in an idle state in the case of abnormal mains. Therefore, utilization of the first rectifier boost circuit 421 and the second rectifier boost circuit 422 is effectively improved, production costs of the uninterruptible power supply 400 can be effectively reduced, and a size of the uninterruptible power supply 400 is reduced.

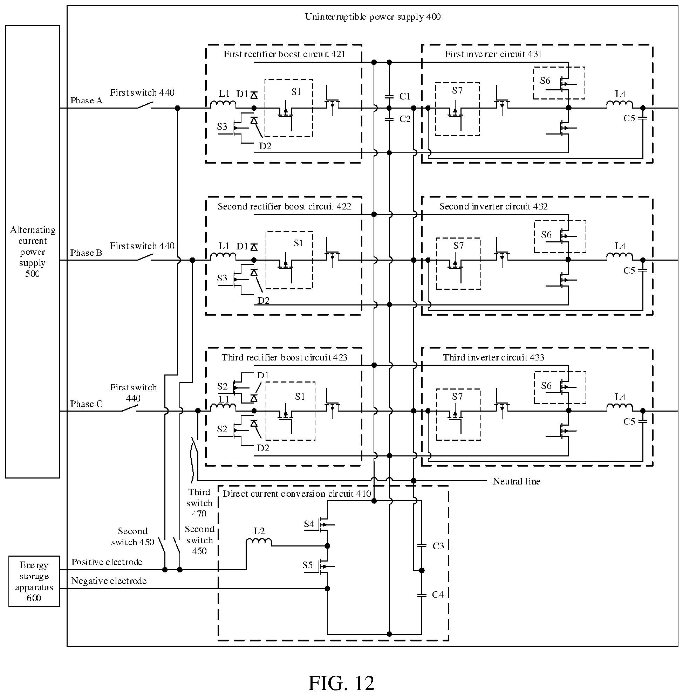

In a possible embodiment, as shown in FIG. 12, the second switch 450 is separately disposed between a positive input end of the direct current conversion circuit 410 and the input end of each of the first rectifier boost circuit 421 and the second rectifier boost circuit 422. The first rectifier boost circuit 421 and the second rectifier boost circuit 422 further include the third switching transistor S3. The third switching transistor S3 is connected in parallel to a diode D2 located on a lower bridge arm of the diode bridge arm.

In a possible embodiment, as shown in FIG. 12, a capacitor branch and a second switching transistor bridge arm that are connected in parallel to the bus capacitor are disposed in the direct current conversion circuit 410. The capacitor branch includes two capacitors C3 and C4 connected in series. A midpoint of the capacitor branch is connected to the neutral line. The second switching transistor bridge arm includes a fourth switching transistor S4 and a fifth switching transistor S5 that are connected in series. A second inductor L2 is disposed between a midpoint of the second switching transistor bridge arm and the positive input end of the direct current conversion circuit.

The following describes an operating principle of the uninterruptible power supply 400 with reference to FIG. 12.

In the case of normal mains, when the first switches 440 are all turned on, the second switches 450 are all turned off, each rectifier boost circuit is connected to a corresponding one-phase output end of the connected alternating current power supply 500, and the first rectifier boost circuit 421 and the second rectifier boost circuit 422 are disconnected from the energy storage apparatus 600:
For operating principles of each rectifier boost circuit and each inverter circuit, refer to operating principles of each rectifier boost circuit and each inverter circuit in the uninterruptible power supply 400 shown in FIG. 9. Details are not described in embodiments of this application.

The direct current conversion circuit 410 is configured to: obtain the fourth direct current voltage from the bus capacitor, perform voltage buck on the fourth direct current voltage, and output a reduced fourth direct current voltage to the energy storage apparatus 600. Specifically, the fourth switching transistor S4 in the direct current conversion circuit 410 is always in a turn-on state. When the fifth switching transistor S5 is turned off, the second inductor L2 is charged. When the fifth switching transistor S5 is turned on, the second inductor L2 freewheels through the fifth switching transistor S5, and the second inductor L2 is discharged.

It may be understood that, turn-on time and turn-off time (which may also be referred to as a duty cycle) of the fifth switching transistor S5 in the direct current conversion circuit 410 are controlled to cause the second inductor L2 to be charged and discharged, so that voltage buck can be implemented. For a specific voltage buck principle of the direct current conversion circuit 410, refer to a buck (Buck) circuit. Details are not described in embodiments of this application.

Refer to FIG. 12. In the case of abnormal mains, in a process in which the first switches 440 and the second switches 450 are both turned off, and the first rectifier boost circuit 421 and the second rectifier boost circuit 422 are switched to receive the first direct current voltage output by the energy storage apparatus 600, or when mains returns to normal, in a process in which the first switches 440 are all turned on and the second switches 450 are all turned off, the first rectifier boost circuit 421 and the second rectifier boost circuit 422 resume receiving the mains, each rectifier boost circuit is disconnected from the alternating current power supply 500, and the first rectifier boost circuit 421 and the second rectifier boost circuit 422 are disconnected from the energy storage apparatus 600:
The direct current conversion circuit 410 is further configured to: receive the first direct current voltage, convert the first direct current voltage into the fifth direct current voltage, and transmit the fifth direct current voltage to the bus capacitor. Specifically, when the fifth switching transistor S5 is turned on and the fourth switching transistor S4 is turned off, the second inductor L2 is charged. When the fifth switching transistor S5 is turned off and the fourth switching transistor S4 is turned on, the second inductor L2 is discharged.

It may be understood that, turn-on time and turn-off time (which may also be referred to as a duty cycle) of the fourth switching transistor S4 and the fifth switching transistor S5 in the direct current conversion circuit 410 are controlled to cause the second inductor L2 to be charged and discharged, so that voltage boost can be implemented. For a specific voltage boost principle of the direct current conversion circuit 410, refer to a boost (Boost) chopper circuit. Details are not described in embodiments of this application.

Refer to FIG. 12. In the case of abnormal mains, when the first switches 440 are all turned off, the second switches 450 are all turned on, each rectifier boost circuit is disconnected from a corresponding one-phase output end of the connected alternating current power supply 500, and the first rectifier boost circuit 421 and the second rectifier boost circuit 422 are connected to the energy storage apparatus 600:
The first rectifier boost circuit 421 and the second rectifier boost circuit 422 are configured to: receive the first direct current voltage output by the energy storage apparatus 600, convert the first direct current voltage into a second direct current voltage, and output the second direct current voltage to the bus capacitor. Specifically, the first rectifier boost circuit 421 is used as an example. When the third switching transistor S3 is turned on, a current output by a positive electrode of the energy storage apparatus 600 sequentially flows through the first inductor L1 and the third switching transistor S3, and returns to a negative electrode of the energy storage apparatus 600 through a second end of the second capacitor C2. In this case, the first inductor L1 in the first rectifier boost circuit 421 is charged. When the third switching transistor S3 is turned off, a current output by the positive electrode of the energy storage apparatus 600 sequentially flows through the first inductor L1, the first diode D1, the first capacitor C1, and the second capacitor C2, and returns to the negative electrode of the energy storage apparatus 600. In this case, the first inductor L1 in the first rectifier boost circuit 421 is discharged. It may be understood that, in this case, the second rectifier boost circuit 422 is connected in parallel to the first rectifier boost circuit 421, and an operating principle of the second rectifier boost circuit 422 is the same as that of the first rectifier boost circuit 421.

It may be understood that, turn-on time and turn-off time (which may also be referred to as a duty cycle) of the third switching transistor S3 in the first rectifier boost circuit 421 and the third switching transistor S3 in the second rectifier boost circuit 422 are controlled to cause the first inductor L1 in the first rectifier boost circuit 421 and the first inductor L1 in the second rectifier boost circuit 422 to be charged and discharged, so that voltage boost can be implemented. For a specific principle, refer to a boost (Boost) chopper circuit. Details are not described in embodiments of this application. However, in the UPS 200, the rectifier circuit 230 is in an idle state in the case of abnormal mains. Therefore, utilization of the first rectifier boost circuit 421 and the second rectifier boost circuit 422 is effectively improved, production costs of the uninterruptible power supply 400 can be effectively reduced, and a size of the uninterruptible power supply 400 is reduced.

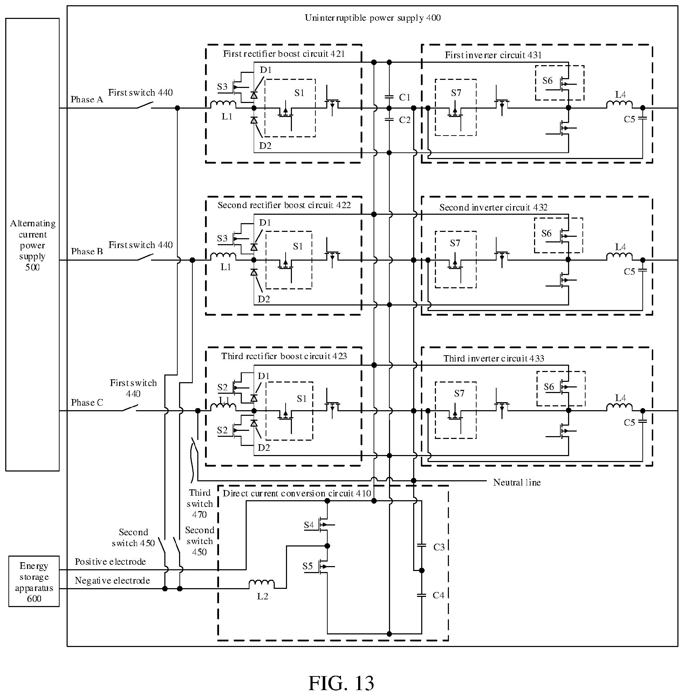

In a possible embodiment, as shown in FIG. 13, the second switch 450 is separately disposed between a negative input end of the direct current conversion circuit 410 and the input end of each of the first rectifier boost circuit 421 and the second rectifier boost circuit 422. The first rectifier boost circuit 421 and the second rectifier boost circuit 422 further include the third switching transistor S3. The third switching transistor S3 is connected in parallel to a diode D1 located on an upper bridge arm of the diode bridge arm.

In a possible embodiment, as shown in FIG. 13, a capacitor branch and a second switching transistor bridge arm that are connected in parallel to the bus capacitor are disposed in the direct current conversion circuit 410. The capacitor branch includes two capacitors C3 and C4 connected in series. A midpoint of the capacitor branch is connected to the neutral line. The second switching transistor bridge arm includes a fourth switching transistor S4 and a fifth switching transistor S5 that are connected in series. A second inductor L2 is disposed between a midpoint of the second switching transistor bridge arm and the negative input end of the direct current conversion circuit 410.

The following describes an operating principle of the uninterruptible power supply 400 with reference to FIG. 13.

In the case of normal mains, when the first switches 440 are all turned on, the second switches 450 are all turned off, each rectifier boost circuit is connected to a corresponding one-phase output end of the connected alternating current power supply 500, and the first rectifier boost circuit 421 and the second rectifier boost circuit 422 are disconnected from the energy storage apparatus 600:
For operating principles of each rectifier boost circuit and each inverter circuit, refer to operating principles of each rectifier boost circuit and each inverter circuit in the uninterruptible power supply 400 shown in FIG. 9. Details are not described in embodiments of this application.

The direct current conversion circuit 410 is configured to: obtain the fourth direct current voltage from the bus capacitor, perform voltage buck on the fourth direct current voltage, and output a reduced fourth direct current voltage to the energy storage apparatus 600. Specifically, the fifth switching transistor S5 in the direct current conversion circuit 410 is always in a turn-on state. When the fourth switching transistor S4 is turned off, the second inductor L2 is charged. When the fourth switching transistor S4 is turned on, the second inductor L2 freewheels through the fourth switching transistor S4.

It may be understood that, turn-on time and turn-off time (which may also be referred to as a duty cycle) of the fourth switching transistor S4 in the direct current conversion circuit 410 are controlled to cause the second inductor L2 to be charged and discharged, so that voltage buck can be implemented. For a specific voltage buck principle of the direct current conversion circuit 410, refer to a buck (Buck) circuit. Details are not described in embodiments of this application.

Refer to FIG. 13. In the case of abnormal mains, in a process in which the first switches 440 and the second switches 450 are all turned off, and the first rectifier boost circuit 421 and the second rectifier boost circuit 422 are switched to receive the first direct current voltage output by the energy storage apparatus 600, or when mains returns to normal, in a process in which the first switches 440 and the second switches 450 are both turned off, the first rectifier boost circuit 421 and the second rectifier boost circuit 422 resume receiving the mains, each rectifier boost circuit is disconnected from the alternating current power supply 500, and the first rectifier boost circuit 421 and the second rectifier boost circuit 422 are disconnected from the energy storage apparatus 600:
The direct current conversion circuit 410 is further configured to: receive the first direct current voltage, convert the first direct current voltage into the fifth direct current voltage, and transmit the fifth direct current voltage to the bus capacitor. Specifically, when the fourth switching transistor S4 is turned on and the fifth switching transistor S5 is turned off, the second inductor L2 is charged. When the fourth switching transistor S4 is turned off and the fifth switching transistor S5 is turned on, the second inductor L2 is discharged.

It may be understood that, turn-on time and turn-off time (which may also be referred to as a duty cycle) of the fourth switching transistor S4 and the fifth switching transistor S5 in the direct current conversion circuit 410 are controlled to cause the second inductor L2 to be charged and discharged, so that voltage boost can be implemented. For a specific voltage boost principle of the direct current conversion circuit 410, refer to a boost (Boost) chopper circuit. Details are not described in embodiments of this application.

Refer to FIG. 13. In the case of abnormal mains, when the first switches 440 are all turned off, the second switches 450 are all turned on, each rectifier boost circuit is disconnected from a corresponding one-phase output end of the connected alternating current power supply 500, and the first rectifier boost circuit 421 and the second rectifier boost circuit 422 are connected to the energy storage apparatus 600:
The first rectifier boost circuit 421 and the second rectifier boost circuit 422 are configured to: receive the first direct current voltage output by the energy storage apparatus 600, convert the first direct current voltage into a second direct current voltage, and output the second direct current voltage to the bus capacitor. Specifically, the first rectifier boost circuit 421 is used as an example. When the third switching transistor S3 is turned on, a current output by a positive electrode of the energy storage apparatus 600 sequentially flows through the third switching transistor S3 and the first inductor L1, and returns to a negative electrode of the energy storage apparatus 600. In this case, the first inductor L1 in the first rectifier boost circuit 421 is charged. When the third switching transistor S3 is turned off, a current output by a positive electrode of the energy storage apparatus 600 sequentially flows through the first capacitor C1, the second capacitor C2, the second diode D2, and the first inductor L1, and returns to a negative electrode of the energy storage apparatus 600. In this case, the first inductor L1 in the first rectifier boost circuit 421 is discharged. It may be understood that, in this case, the second rectifier boost circuit 422 is connected in parallel to the first rectifier boost circuit 421, and an operating principle of the second rectifier boost circuit 422 is the same as that of the first rectifier boost circuit 421.

It may be understood that, turn-on time and turn-off time (which may also be referred to as a duty cycle) of the third switching transistor S3 in the first rectifier boost circuit 421 and the third switching transistor S3 in the second rectifier boost circuit 422 are controlled to cause the first inductor L1 in the first rectifier boost circuit 421 and the first inductor L1 in the second rectifier boost circuit 422 to be charged and discharged, so that voltage boost can be implemented. For a specific principle, refer to a boost (Boost) chopper circuit. Details are not described in embodiments of this application. However, in the UPS 200, the rectifier circuit 230 is in an idle state in the case of abnormal mains. Therefore, utilization of the first rectifier boost circuit 421 and the second rectifier boost circuit 422 is effectively improved, production costs of the uninterruptible power supply 400 can be effectively reduced, and a size of the uninterruptible power supply 400 is reduced.

In a possible embodiment, in a state switching process of a switch, the direct current conversion circuit 410 may operate beyond a rated current. When switching of the switch is completed, the direct current conversion circuit 410 may operate at the rated current and output rated power. It may be understood that, when switching of the state of the switch is completed, total output power of the uninterruptible power supply 400 is a sum of rated output power of the direct current conversion circuit 410 and output power of each of the first rectifier boost circuit 421 and the second rectifier boost circuit 422.

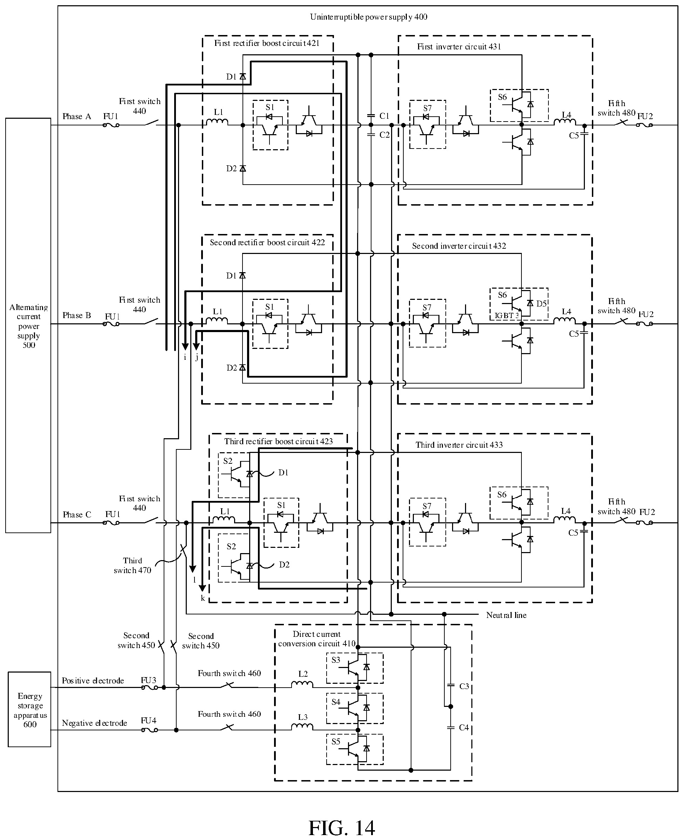

In a possible embodiment, as shown in FIG. 14, in the uninterruptible power supply 400, a fourth switch 460 is separately disposed between a positive input end and a negative input end of the direct current conversion circuit 410 and a positive electrode and a negative electrode of the energy storage apparatus 600. In the case of abnormal mains, when switching of a switch is completed, and the uninterruptible power supply 400 receives the first direct current voltage output by the energy storage apparatus 600, the fourth switches 460 may be all turned off, so that the direct current conversion circuit 410 does not output power anymore. The fourth switch 460 is controlled to be turned on/off, so that the direct current conversion circuit 410 can be controlled to output power or not. This can adjust the total output power of the uninterruptible power supply 400, so that an adjustment range of the total output power of the uninterruptible power supply 400 can be extended, to supply power to a load having different power requirements. In this embodiment of this application, an example in which the fourth switch 460 is always in a turn-on state is used for description.

In a possible embodiment, as shown in FIG. 12, FIG. 13, or FIG. 14, a third switch 470 is disposed between the input end of the third rectifier boost circuit 423 and the neutral line. A second switching transistor S2 is disposed in parallel with each of the two diodes D1 and D2 of the diode bridge arm in the third rectifier boost circuit 423.

In the case of abnormal mains, when the first switches 440 are all turned off and the second switches 450 are all turned on, the first rectifier boost circuit 421 and the second rectifier boost circuit 422 are configured to receive the first direct current voltage output by the energy storage apparatus 600. When the uninterruptible power supply 400 supplies power to half-wave load, or load of each inverter is unbalanced in a positive half-cycle and a negative half-cycle, a voltage of the positive direct current bus is greater than a voltage of the negative direct current bus, or a voltage of the positive direct current bus is less than a voltage of the negative direct current bus. For example, when the uninterruptible power supply 400 supplies power to positive half-wave load, the positive half-wave load obtains energy from the positive direct current bus instead of the negative direct current bus. As a result, the voltage of the positive direct current bus is less than the voltage of the negative direct current bus. Consequently, the voltage of the positive direct current bus is unbalanced with the voltage of the negative direct current bus.

Refer to FIG. 14. If the voltage of the positive direct current bus is greater than the voltage of the negative direct current bus, the second switching transistor S2 connected in parallel to a lower bridge arm diode D2 of the diode bridge arm in the third rectifier boost circuit 423 is always turned off, and when the second switching transistor S2 connected in parallel to an upper bridge arm diode D1 of the diode bridge arm is turned on, the positive direct current bus charges the first inductor L1 through the second switching transistor S2. A current direction is shown by K in FIG. 14. When the second switching transistor S2 connected in parallel to the upper bridge arm diode D1 of the diode bridge arm in the third rectifier boost circuit 423 is turned off, the first inductor L1 freewheels through the lower bridge arm diode D2 of the diode bridge arm, and the first inductor L1 supplies power to the negative direct current bus. A current direction is shown by 1 in FIG. 14. Therefore, energy of the positive direct current bus is transferred to the negative direct current bus, thereby achieving balance between the voltage of each of the positive direct current bus and the negative direct current bus and balancing a voltage of the bus capacitor.

Still refer to FIG. 14. If the voltage of the positive direct current bus is less than the voltage of the negative direct current bus, the second switching transistor S2 connected in parallel to the upper bridge arm diode D1 of the diode bridge arm in the third rectifier boost circuit 423 is always turned off, and when the second switching transistor S2 connected in parallel to the lower bridge arm diode D2 of the diode bridge arm is turned on, the negative direct current bus charges the first inductor L1 through the second switching transistor. A current direction is shown by K in FIG. 14. When the second switching transistor S2 connected in parallel to the lower bridge arm diode D2 of the diode bridge arm in the third rectifier boost circuit 423 is turned off, the first inductor L1 freewheels through the upper bridge arm diode D1 of the diode bridge arm, and the first inductor L1 charges the positive direct current bus. A current direction is shown by K in FIG. 14. Therefore, energy of the negative direct current bus is transferred to the positive direct current bus, thereby achieving balance between the voltage of each of the positive direct current bus and the negative direct current bus and balancing a voltage of the bus capacitor.

In a possible embodiment, as shown in FIG. 14, in the uninterruptible power supply 400, a first fuse FU 1 is disposed between each first switch 440 and a one-phase alternating current output end of the alternating current power supply 500. A fifth switch 480 and a second fuse FU 2 that are connected in series are disposed between an output end of each inverter circuit and a one-phase alternating current output end of the uninterruptible power supply 400. The first fuse FU 1 and the second fuse FU 2 are disposed, so that security of the uninterruptible power supply 400 can be improved. When the uninterruptible power supply 400 is faulty, or the uninterruptible power supply 400 is shut down, the fifth switches 480 may be all turned off, and the uninterruptible power supply 400 stops supplying power to a load.

In a possible embodiment, as shown in FIG. 14, in the uninterruptible power supply 400, a third fuse FU 3 may be further disposed between a positive electrode and a negative electrode of the energy storage apparatus 600 and the two fourth switches 460. Therefore, security of the uninterruptible power supply 400 can be further improved.

In a possible embodiment, the uninterruptible power supply 400 may further include a static bypass and a maintenance bypass. Structures of the static bypass and the maintenance bypass may be the same as the structures of the static bypass (for example, the static bypass 220 in FIG. 2) and the maintenance bypass (for example, the maintenance bypass 210 in FIG. 2) in any one of the accompanying drawings of FIG. 1 to FIG. 3. This is not limited in embodiments of this application.

According to the uninterruptible power supply 400 provided in this embodiment of this application, when the first switches 440 are all turned off, the second switches 450 are all turned on, and the first rectifier boost circuit 421 and the second rectifier boost circuit 422 are configured to receive the first direct current voltage output by the energy storage apparatus 600, the third rectifier boost circuit 423 is used to balance the voltage of each of the positive direct current bus and the negative direct current bus. This can improve reliability of the uninterruptible power supply 400 and utilization of the third rectifier boost circuit 423, effectively reduce production costs of the uninterruptible power supply 400, and reduce a size of the uninterruptible power supply 400.

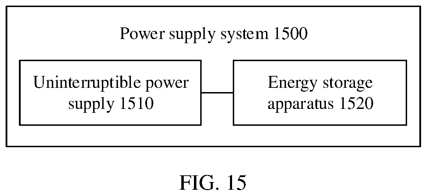

As shown in FIG. 15, an embodiment of this application further provides a power supply system 1500. The power supply system 1500 includes an uninterruptible power supply 1510 and an energy storage apparatus 1520 connected to the uninterruptible power supply 1510. The uninterruptible power supply 1510 is configured to provide a direct current voltage for the energy storage apparatus 1520. A structure of the uninterruptible power supply 1510 is the structure of the uninterruptible power supply 400 shown in any one of FIG. 4 to FIG. 14.

The foregoing detailed descriptions of the uninterruptible power supply 400 and beneficial effect analysis may be correspondingly introduced to the power supply system 1500. Details are not described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An uninterruptible power supply, wherein the uninterruptible power supply comprises a direct current conversion circuit and three rectifier boost circuits, input ends of the three rectifier boost circuits are configured to connect to three-phase output ends of an alternating current power supply respectively, each of the three rectifier boost circuits is connected in series to an inverter circuit, an input end of at least one rectifier boost circuit of the three rectifier boost circuits is further configured to connect to an energy storage apparatus, an output end of the direct current conversion circuit is connected to an output end of each rectifier boost circuit, and an input end of the direct current conversion circuit is configured to connect to the energy storage apparatus; and
when each rectifier boost circuit is disconnected from a corresponding one-phase output end of the connected alternating current power supply and the at least one rectifier boost circuit is connected to the energy storage apparatus, the at least one rectifier boost circuit and the direct current conversion circuit are configured to receive a first direct current voltage output by the energy storage apparatus, the at least one rectifier boost circuit is configured to: convert the first direct current voltage into a second direct current voltage, and output the second direct current voltage to the inverter circuit, and the direct current conversion circuit is configured to: convert the first direct current voltage into a third direct current voltage, and output the third direct current voltage to the inverter circuit.

2. The uninterruptible power supply according to claim 1, wherein when each rectifier boost circuit is connected to a corresponding one-phase output end of the connected alternating current power supply and the at least one rectifier boost circuit is disconnected from the energy storage apparatus, each rectifier boost circuit is configured to: receive a first alternating current voltage output by one phase of the alternating current power supply, convert the first alternating current voltage into a fourth direct current voltage, and output the fourth direct current voltage to the direct current conversion circuit and the inverter circuit that is connected in series to the rectifier boost circuit, and the direct current conversion circuit is configured to perform voltage conversion on the received fourth direct current voltage and output a converted fourth direct current voltage to the energy storage apparatus.

3. The uninterruptible power supply according to claim 1 or 2, wherein when each rectifier boost circuit is disconnected from the alternating current power supply and the at least one rectifier boost circuit is disconnected from the energy storage apparatus, the direct current conversion circuit is configured to: receive the first direct current voltage output by the energy storage apparatus, convert the first direct current voltage into a fifth direct current voltage, and output the fifth direct current voltage to each inverter circuit.

4. The uninterruptible power supply according to any one of claims 1 to 3, wherein a first switch is disposed between an input end of each rectifier boost circuit and a one-phase alternating current output end of the alternating current power supply, and a second switch is separately disposed between the input end of the at least one rectifier boost circuit and the input end of the direct current conversion circuit, wherein
when the first switches are all turned on, each rectifier boost circuit is connected to the alternating current power supply; or
when the first switches are all turned off, each rectifier boost circuit is disconnected from the alternating current power supply; and
when the second switches are all turned on, the at least one rectifier boost circuit is connected to the energy storage apparatus; or
when the second switches are all turned off, the at least one rectifier boost circuit is disconnected from the energy storage apparatus.

5. The uninterruptible power supply according to claim 4, wherein
a positive output end and a negative output end of each rectifier boost circuit are connected to a positive direct current bus and a negative direct current bus respectively, a bus capacitor is connected between the positive direct current bus and the negative direct current bus, the bus capacitor comprises two capacitors connected in series, and a midpoint of the bus capacitor is connected to a neutral line; and
the at least one rectifier boost circuit comprises a first rectifier boost circuit and a second rectifier boost circuit, and the second switch is separately disposed between the input end of the direct current conversion circuit and an input end of each of the first rectifier boost circuit and the second rectifier boost circuit.

6. The uninterruptible power supply according to claim 5, wherein when each rectifier boost circuit is disconnected from the alternating current power supply and the at least one rectifier boost circuit is disconnected from the energy storage apparatus,
the direct current conversion circuit is further configured to: receive the first direct current voltage, convert the first direct current voltage into the fifth direct current voltage, and transmit the fifth direct current voltage to the bus capacitor, and each inverter circuit is further configured to obtain the fifth direct current voltage from the bus capacitor.

7. The uninterruptible power supply according to claim 5 or 6, wherein
each rectifier boost circuit comprises a diode bridge arm, a first inductor, and a first switching transistor bridge arm, wherein the diode bridge arm comprises two diodes connected in series, the first inductor is connected between a midpoint of the diode bridge arm and the first switch that corresponds to each rectifier boost circuit, the first switching transistor bridge arm is connected between the midpoint of the diode bridge arm and the neutral line, the first switching transistor bridge arm comprises two first switching transistors connected in series, and the two first switching transistors share a common anode or a common cathode; and
the three rectifier boost circuits further comprise a third rectifier boost circuit, a third switch is disposed between an input end of the third rectifier boost circuit and the neutral line, and a second switching transistor is disposed in parallel with each of the two diodes of the diode bridge arm in the third rectifier boost circuit.

8. The uninterruptible power supply according to claim 7, wherein when the first switches are all turned off and the second switches are all turned on,
if a voltage of the positive direct current bus is greater than a voltage of the negative direct current bus, in the third rectifier boost circuit, the second switching transistor connected in parallel to an upper bridge arm diode of the diode bridge arm is turned on, and the second switching transistor connected in parallel to a lower bridge arm diode of the diode bridge arm is turned off; or
if a voltage of the positive direct current bus is less than a voltage of the negative direct current bus, in the third rectifier boost circuit, the second switching transistor connected in parallel to a lower bridge arm diode of the diode bridge arm is turned on, and the second switching transistor connected in parallel to an upper bridge arm diode of the diode bridge arm is turned off.

9. The uninterruptible power supply according to claim 8, wherein the second switch is disposed between the input end of the first rectifier boost circuit and a positive input end of the direct current conversion circuit, and the second switch is disposed between the input end of the second rectifier boost circuit and a negative input end of the direct current conversion circuit.

10. The uninterruptible power supply according to claim 9, wherein
a capacitor branch and a second switching transistor bridge arm that are connected in parallel to the bus capacitor are disposed in the direct current conversion circuit, wherein the capacitor branch comprises two capacitors connected in series, a midpoint of the capacitor branch is connected to the neutral line, the second switching transistor bridge arm comprises a third switching transistor, a fourth switching transistor, and a fifth switching transistor that are sequentially connected in series, a second inductor is disposed between an end of the fourth switching transistor and the positive input end of the direct current conversion circuit, and a third inductor is disposed between the other end of the fourth switching transistor and the negative input end of the direct current conversion circuit.

11. The uninterruptible power supply according to claim 8, wherein the second switch is separately disposed between a positive input end of the direct current conversion circuit and the input end of each of the first rectifier boost circuit and the second rectifier boost circuit; and
the first rectifier boost circuit and the second rectifier boost circuit further comprise a third switching transistor, and the third switching transistor is connected in parallel to a diode located on a lower bridge arm of the diode bridge arm.

12. The uninterruptible power supply according to claim 11, wherein
a capacitor branch and a second switching transistor bridge arm that are connected in parallel to the bus capacitor are disposed in the direct current conversion circuit, wherein the capacitor branch comprises two capacitors connected in series, a midpoint of the capacitor branch is connected to the neutral line, the second switching transistor bridge arm comprises a fourth switching transistor and a fifth switching transistor that are connected in series, and a second inductor is disposed between a midpoint of the second switching transistor bridge arm and the positive input end of the direct current conversion circuit.

13. The uninterruptible power supply according to claim 8, wherein the second switch is separately disposed between a negative input end of the direct current conversion circuit and the input end of each of the first rectifier boost circuit and the second rectifier boost circuit; and
the first rectifier boost circuit and the second rectifier boost circuit further comprise a third switching transistor, and the third switching transistor is connected in parallel to a diode located on an upper bridge arm of the diode bridge arm.

14. The uninterruptible power supply according to claim 13, wherein
a capacitor branch and a second switching transistor bridge arm that are connected in parallel to the bus capacitor are disposed in the direct current conversion circuit, wherein the capacitor branch comprises two capacitors connected in series, a midpoint of the capacitor branch is connected to the neutral line, the second switching transistor bridge arm comprises a fourth switching transistor and a fifth switching transistor that are connected in series, and a second inductor is disposed between a midpoint of the second switching transistor bridge arm and the negative input end of the direct current conversion circuit.

15. A power supply system, wherein the power supply system comprises the uninterruptible power supply according to any one of claims 1 to 14 and an energy storage apparatus, and the uninterruptible power supply is configured to provide a direct current voltage for the energy storage apparatus.
